# EUROPÄISCHE PATENTSCHRIFT

(11) **EP 2 459 613 B1**
(45) Veröffentlichungstag und Bekanntmachung des Hinweises auf die Patenterteilung: **04.09.2013**
(21) Anmeldenummer: 10735017.5
(22) Anmeldetag: 28.07.2010
(51) Int. Cl.: C08L 51/04, C08G 59/22, C08L 63/00, C09J 163/00

(54) **SCHLAGZÄHMODIFIZIERTE ZUSAMMENSETZUNGEN AUF EPOXIDHARZBASIS**
IMPACT RESISTANT COMPOSITIONS BASE DON EPOXY RESINS
COMPOSITIONS RESISTANTES AUX CHOCS A BASE DE RESINES EPOXYDES

(30) Priorität: 29.07.2009 DE 102009028100
(43) Veröffentlichungstag der Anmeldung: 06.06.2012
(73) Patentinhaber: Henkel AG & Co. KGaA, 40589 Düsseldorf (DE)
(72) Erfinder: SCHÖNFELD, Rainer, 40627 Düsseldorf (DE); KREILING, Stefan, 69214 Eppelheim (DE); BARRIAU, Emilie, Laguna Niguel, CA 92677 (US); WALTER, Pablo, 40221 Düsseldorf (DE)
(86) Internationale Anmeldenummer: PCT/EP2010/060958
(87) Internationale Veröffentlichungsnummer: WO 2011/012647

(56) Entgegenhaltungen:
- EP-A2- 0 276 716
- EP-A2- 0 754 741
- EP-A2- 0 754 742
- WO-A1-2007/025007
- WO-A1-2008/027119
- DATABASE CAPLUS [Online] CHEMICAL ABSTRACTS SERVICE, COLUMBUS, OHIO, US; 16. Mai 2005 (2005-05-16), XU, L. ROY ET AL XU, L. ROY ET AL: "Structural nanocomposite bonding reinforced by graphite nanofibers with surface treatments", XP002613096, gefunden im STN Database accession no. 2005:416958 -& XU, L. ROY ET AL XU, L. ROY ET AL: "Structural nanocomposite bonding reinforced by graphite nanofibers with surface treatments", MATERIALS RESEARCH SOCIETY SYMPOSIUM PROCEEDINGS, Bd. 843, 2005, Seiten 81-88, XP009142157,

## Beschreibung

Die vorliegende Erfindung betrifft ein Epoxidharzsystem, das einen hohen E-Modul, hohe Zähigkeit und hohe Bruchdehnung aufweist. Es kann als in einem Klebstoff, in einer Matrix eines Composits oder bei Zusatz eines Blähmittels (= Treibmittels) in einem Strukturschaum verwendet werden. Die Verbesserung der genannten Eigenschaften gelingt aufgrund des Zusatzes einer günstig herstellbaren Urethangruppenfreien Polyetherverbindung.

Epoxid-basierte Harzsysteme werden seit langem erfolgreich in der Luftfahrt-, Automobil- oder Elektroindustrie als Klebstoffe, Dichtstoffe oder zur Beschichtung von Oberflächen benutzt oder als Harzsysteme mit einer Reihe unterschiedlicher Materialien für die Herstellung von Verbundwerkstoffen verwendet. Härtbare Formulierungen, die Epoxid/Härter-Mischungen enthalten, eignen sich insbesondere als Strukturklebstoffe und als Matrixharze für Kompositwerkstoffe. Wichtige Materialeigenschaften der gehärteten Formulierungen sind hierbei u.a. Bruchzähigkeit, Risszähigkeit, Kerbschlagzähigkeit, Schlagschälfestigkeit, E-Modul, Bruchdehnung, Zugfestigkeit und Glasübergangstemperatur. Besonders wünschenswert für Strukturklebstoffe sowie für Matrixharze für Kompositwerkstoffe ist eine hohe Bruchdehnung bei gleichzeitig hohem E-Modul, hohem kritischen Spannungsintensitätsfaktor in Zugbeanspruchung (= K1C) sowie niedrigen Materialkosten.

WO 2007/004184 beschreibt ein thermisch aufschäumbares Material, das die folgenden Komponenten enthält: a) ein festes Epoxidharz, das im Wesentlichen frei ist vom flüssigem oder halbfestem Epoxidharz, b)einen Schlagzähigkeits-Verbesserer, c) einen Härter und d) ein Hitze-aktivierbares Treibmittel. Dabei kann der Schlagzähigkeits-Verbesserer ein thermoplastisches Material darstellen. Beispielsweise werden genannt: Epoxy-Polyurethan-Hybride und Isocyanat-Prepolymere (beispielsweise Isocyanat-terminierte Polyetherpolyole), die eine Molmasse im Bereich zwischen 1000 und 10000 g/mol aufweisen.

WO 2007/025007 offenbart eine Zusammensetzung mit folgenden Komponenten: a) zumindest ein Epoxidharz, b) Kautschuk-Partikel mit einer Kern-Schale-Struktur, c) einen weiteren Schlagzähigkeits-Modifizierer beziehungsweise Zähigkeits-Verbesserer und d) einen Hitze-aktivierbaren latenten Härter. Als Komponenten c) werden beispielsweise Polyurethane genannt, die sich von Hydroxyl-terminierten Polyoxyalkylenen, wie beispielsweise Polypropylenglycol oder Polytetrahydrofurandiol ableiten. Diese sollten thermoplastisches Verhalten zeigen. Weiterhin werden Umsetzungsprodukte von Amin-terminierten Polyethern mit Epoxidharzen als Komponente c) genannt, wobei die Amin-terminierten Polyether di- oder trifunktional sein können. Vorzugsweise enthalten die Amin-terminierten Polyether mindestens zwei Aminogruppen pro Molekül.

DE-A-2829236 offenbart lineare, Glycidyl- und Hydroxylgruppen-haltige Polyetherharze und deren Verwendung zusammen mit Aminoplast-oder Phenoplasthärtungsmittein in härtbaren Gemischen. Die Polyetherharze werden hergestellt durch Umsetzung von Diglycidylethern von Polyethylen- und Polypropylenglykolen mit zweiwertigen Phenolen.

EP-B-1648950 beschreibt hitzehärtbare Zusammensetzungen auf Epoxidharz-Basis, die zur Verbesserung der Tieftemperatur-Schlagzähigkeit Urethangruppen-haltige Polymere enthalten, die durch Umsetzung einer Monohydroxy-Epoxidverbindung mit Isocyanat-terminierten Polyurethan-Präpolymeren erhalten werden können. Ein ähnliches Prinzip wird in EP-B-1578838 offenbart.

Aus WO 83/04415 sind Epoxidharze bekannt, die Polyetherketten aufweisen, die durch Reaktion von Diepoxiden mit Verbindungen erhalten werden, die zwei aromatische Hydroxylgruppen pro Molekül enthalten. Durch Reaktion mit Härtern für Epoxidharze wie Aminoplastharzen, anderen Aminogruppenhaltigen Harzen oder Diisocyanaten lassen sich hieraus Beschichtungsmaterialien erhalten. Zur Einstellung der für Beschichtungsmittel erforderlichen Viskosität sind beträchtliche Mengen organischer Lösungsmittel enthalten. Beschichtungsmaterialien genügen nicht den Anforderungen, die an Strukturklebstoffe, Strukturschäume oder Matrixmaterialien für Composits gestellt werden.

US 3346532 beschreibt elastomere Copolymere aus zweiwertigen Phenolen und organischen Diepoxiden, die als Ausgangsprodukte für die Herstellung gummiartiger Produkte dienen. Diese genügen nicht den Anforderungen, die an Strukturklebstoffe, Strukturschäume oder Matrixmaterialien für Composits gestellt werden.

Die vorliegende Erfindung stellt ein Epoxidharzsystem zur Verfügung, das einen hohen E-Modul, hohe Zähigkeit und hohe Bruchdehnung aufweist. Es kann in einem Klebstoff, in einer Matrix eines Composits oder bei Zusatz eines Blähmittels in einem Strukturschaum verwendet werden. Die Verbesserung der genannten Eigenschaften gelingt aufgrund des Zusatzes einer günstig herstellbaren Urethangruppenfreien Polyetherverbindung.

In einem ersten Aspekt betrifft die vorliegende Erfindung eine Harzkomponente für einen ein- oder zweikomponentigen Klebstoff oder einen Strukturschaum, enthaltend
C1) mindestens ein Epoxidharz mit durchschnittlich mehr als einer Epoxidgruppe pro Molekül, das nicht der Definition der Komponenten C2) entspricht,
C2) mindestens eine oligomere oder polymere Urethangruppen-freie Polyether-Verbindung, umfassend ein oder mehrere Strukturelemente der allgemeinen Formel (I), 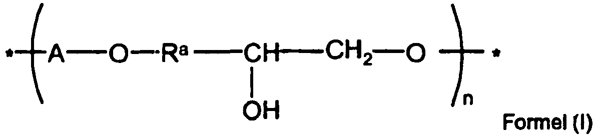 wobei n eine Zahl von 5 bis 10000 ist, jeder Rest R^{a} in jeder Wiederholungseinheit unabhängig voneinander für eine divalente Verbindungsgruppe steht, die 1 bis 100 C-Atome umfasst, und jeder Rest A in jeder Wiederholungseinheit unabhängig voneinander ausgewählt wird aus K oder L, wobei K für einen divalenten Rest von aromatischen Dihydroxyverbindungen nach Entfernen der beiden Hydroxygruppen steht und L für einen divalenten Rest von Polyethern nach Entfernen zweier terminaler Hydroxygruppen steht,
mit der Maßgabe, dass, bezogen auf die Gesamtanzahl aller Reste A in der oligomeren oder polymeren Urethangruppen-freien Polyether-Verbindung, 20 bis 80% aller Reste A für K und 20 bis 80% aller Reste A für L stehen.

Unter einem Epoxidharz" wird im Rahmen der vorliegenden Erfindung eine Harz-Zusammensetzung verstanden, die auf der Basis von Epoxidverbindungen oder epoxidhaltigen Verbindungen gebildet wird. Von der Bezeichnung "Epoxidharz" sind im Sinne der vorliegenden Erfindung explizit alle oligomeren oder polymeren Urethangruppen-freien Polyether-Verbindung der Komponente C2) ausgenommen, selbst wenn diese terminale Oxirangruppen aufweisen.

In einer bevorzugten Ausführungsform der Erfindung können die Epoxidverbindungen oder epoxidhaltigen Verbindungen des Epoxidharzsystems der polymerisierbaren Zubereitung sowohl oligomere als auch monomere Epoxidverbindungen sowie Epoxide vom polymeren Typ umfassen und können aliphatische, cycloaliphatische, aromatische oder heterocyclische Verbindungen darstellen. Geeignete Epoxidharze im Rahmen der vorliegenden Erfindung sind beispielsweise vorzugsweise ausgewählt aus Epoxidharzen vom Bisphenol-A-Typ, Epoxidharzen vom Bisphenol-S-Typ, Epoxidharzen vom Bisphenol-F-Typ, Epoxidharzen vom Phenol-Novolak-Typ, Epoxidharzen vom Cresol-Novolak-Typ, epoxidierten Produkten zahlreicher Dicyclopentadien-modifizierter Phenolharze, erhältlich durch Umsetzung von Dicyclopentadien mit zahlreichen Phenolen, epoxidierte Produkte von 2,2',6,6'-Tetramethylbiphenol, aromatische Epoxidharze wie Epoxidharze mit Naphthalin-Grundgerüst und Epoxidharze mit Fluoren-Grundgerüst, aliphatische Epoxidharze, alicyclische Epoxidharze wie 3,4-Epoxycyclohexylmethyl-3,4-epoxycyclohexancarboxylat und Bis(3,4-epoxycyclohexyl)adipat, und Epoxidharze mit einem Heteroring wie Triglycidylisocyanurat. Insbesondere umfassen die Epoxidharze Octadecylenoxid, Styroloxid, Vinylcyclohexenoxid, Glycidol, Vinylcyclohexendioxid, 3,4-Epoxycyclo-hexylmethyl-3,4-epoxycyclohexen-carboxylat, 3,4-Epoxy-6-methylcylcohexylmethyl-3,4-epoxy-6-methyl-cyclohexencarboxylat, Bis(3,4-epoxy-6-methy)cyclohexylmethyl)adipat, Bis(2,3-epoxy-cyclopentyl)ether, aliphatisches, Dipentendioxid, epoxidiertes Polybutadien (z.B. Krasol Produkte von Sartomer), Epoxidfunktionalität enthaltendes Siliconharz, flammhemmende Epoxidharze (z.B. "DER-580", Bis(3,4-epoxycyclohexyl)adipat, 2-(3,4-Epoxycyclohexyl-5,5-spiro-3,4-epoxy)cyclohexan-metardioxan, Vinylcyclohexenmonoxid und 2-Epoxyhexadecan.

Besonders bevorzugte Epoxidharze im Sinne der vorliegenden Erfindung sind cycloaliphatische Epoxidharze, die kommerziell beispielsweise unter dem Handelsnamen CY179 (Huntsman), ACHWL CER 4221 (Achiewell, LLC) oder Cyracure 6105/6110 (DOW Chemical) erhältlich sind.

Weiterhin umfassen die bevorzugten Epoxidharze zum Beispiel das Reaktionsprodukt aus Bisphenol A und Epichlorhydrin, das Reaktionsprodukt aus Phenol und Formaldehyd (Novolak-Harze) und Epichlorhydrin, Glycidyl Ester sowie das Reaktionsprodukt aus Epichlorhydrin und p-Aminophenol.

Weitere Polyphenole, die durch Umsetzung mit Epichlorhydrin (oder Epibromhydrin) geeignete Epoxidharz-Prepolymere liefern, sind: Resorcin, 1,2-Dihydroxybenzol, Hydrochinon, bis(4-hdroxyphenyl)-1,1-isobutan, 4,4'-dihydroxybenzophenon, bis(4-hydroxyphenyl)-1,1-ethan und 1,5-hydroxynaphthalin.

Weitere geeignete Epoxid-Prepolymere sind Polyglycidylether von Polyalkoholen oder Diaminen. Solche Polyglycidylether leiten sich ab von Polyalkoholen, wie beispielsweise Ethylenglycol, Diethylenglycol, Triethylenglycol, 1,2-Propylenglycol, 1,4-Butylenglycol, Triethylenglycol, 1,5-Pentandiol, 1,6-Hexandiol oder Trimethylolpropan.

Weitere bevorzugte Epoxidharze, die kommerziell erhältlich sind, umfassen insbesondere Octadecylenoxid, Epichlorhydrin, Styroloxid, Vinylcyclohexenoxid, Glycidol, Glycidylmethacrylat, Diglycidylether von Bisphenol A (z.B. diejenigen, welche unter den Handelsbezeichnungen "Epon 828", "Epon 825", "Epon 1004" und "Epon 1010" der Hexion Specialty Chemicals Inc., "DER-331", "DER-332", "DER-334", "DER-732" und "DER⁻736" der Dow Chemical Co. erhältlich sind), Vinylcyclohexendioxid, 3,4-Epoxycyclohexylmethyl-3,4-epoxycyclohexen-carboxylat, 3,4-Epoxy-6-methylcyclohexylmethyl-3,4-epoxy-6-methyl-cyclohexencarboxylat, Bis(3,4-epoxy-6-methylcyclohexylmethyl)adipat, Bis(2,3-epoxy-cyclopentyl)ether, aliphatisches, mit Polypropylenglycol modifiziertes Epoxid, Dipentendioxid, epoxidiertes Polybutadien (z.B. Krasol Produkte von Sartomer), Epoxidfunktionalität enthaltendes Siliconharz, flammhemmende Epoxidharze (z.B. "DER-580", ein bromiertes Epoxidharz vom Bisphenol-Typ, welches von Dow Chemical Co. erhaeltlich ist), 1,4-Butandiol-diglycidylether eines Phenolformaldehyd-Novolaks (z.B."DEN-431" und "DEN-438" der Dow Chemical Co.), sowie Resorcin-diglycidylether (z.B. "Kopoxite" der Koppers Company Inc.), Bis(3,4-epoxycyclohexyl)adipat, 2-(3,4-Epoxycyclohexyl-5,5-spiro-3,4-epoxy)cyclohexan-meta-dioxan, Vinylcyclohexenmonoxid, 1,2-Epoxyhexadecan, Alkylglycidilether wie z.B. C8-C10-Alkyl-glycidylether (z.B. "HELOXY Modifier 7" der Hexion Specialty Chemicals Inc.), C12-C14-Alkyl-glycidylether (z.B. "HELOXY Modifier 8" der Hexion Specialty Chemicals Inc.), Butylglycidylether (z.B. "HELOXY Modifier 61" der Hexion Specialty Chemicals Inc.), Cresylglycidylether (z.B. "HELOXY Modifier 62" der Hexion Specialty Chemicals Inc.), p-tert.-Butylphenyl-glycidylether (z.B. "HELOXY Modifier 65" der Hexion Specialty Chemicals Inc.), polyfunktionelle Glycidylether wie z.B. Diglycidylether von 1,4-Butandiol (z.B. "HELOXY Modifier 67" der Hexion Specialty Chemicals Inc.), Diglycidylether von Neopentylglycol (z.B. "HELOXY Modifier 68" der Hexion Specialty Chemicals Inc.), Diglycidylether von Cyclohexandimethanol (z.B. "HELOXY Modifier 107" der Hexion Specialty Chemicals Inc.), Trimethylolethan-triglycidilether (z.B. "HELOXY Modifier 44" der Hexion Specialty Chemicals Inc.), Trimethylolpropan-triglycidylether (z.B. "HELOXY Modifier 48" der Hexion Specialty Chemicals Inc.), Polyglycidylether eines aliphatischen Polyols (z.B. "HELOXY Modifier 84" der Hexion Specialty Chemicals Inc.), Polyglycoldiepoxid (z.B. "HELOXY Modifier 32" der Hexion Specialty Chemicals Inc.), Bisphenol F-Epoxide (z.B. "EPN-1138" oder GY-281" der Huntsman Int. LLC), 9,9-Bis-4-(2,3-epoxypropoxy)-phenylfluorenon (z.B. "Epon 1079" der Hexion Specialty Chemicals Inc.).

Weitere bevorzugte kommerziell erhältliche Verbindungen sind z. B. ausgewählt aus Araldite^{™} 6010, Araldit^{™} GY-281^{™}, Araldit^{™} ECN-1273, Araldit^{™} ECN-1280, Araldit^{™} MY-720, RD-2 von der Huntsman Int. LLC; DEN^{™} 432, DEN^{™} 438, DEN^{™} 485 von Dow Chemical Co., Epon^{™} 812, 826, 830, 834, 836, 871, 872,1001, 1031 etc. von Hexion Specialty Chemicals Inc. und HPT^{™} 1071, HPT^{™} 1079 ebenfalls von Hexion Specialty Chemicals Inc., als Novolak-Harze weiterhin beispielsweise Epi-Rez^{™} 5132 von Hexion Specialty Chemicals Inc., ESCN-001 von Sumitomo Chemical, Quatrex 5010 von Dow Chemical Co., RE 305S von Nippon Kayaku, Epicion^{™} N673 von DaiNipon Ink Chemistry oder Epicote^{™} 152 von Hexion Specialty Chemicals Inc.

In einer bevorzugten Ausführungsform umfasst die erfindungsgemäße polymerisierbare Zubereitung eine Mischung mehrerer der vorgenannten Epoxidharze.

Vorzugsweise beträgt der Anteil des Epoxidharzes oder der Mischung mehrerer Epoxidharze an der Gesamtmenge der polymerisierbaren Zubereitung 2 bis 98 Gew.-%, besonders bevorzugt 10 bis 90 Gew.-% und überaus bevorzug 30 bis 85 Gew.-%.

Durch die Verwendung der oligomeren oder polymeren Urethangruppen-freien Polyether-Verbindungen C2) in der polymerisierbaren Zusammensetzung wird eine effektive Schlagzähmodifizierung des gehärteten Produkts erreicht.

Unter einer "Polyether-Verbindung" werden im Sinne der vorliegenden Erfindung Verbindungen verstanden, die vier oder mehr als vier Ether-Verknüpfungen enthalten. Oligomere Polyether-Verbindungen enthalten dabei 4 bis 20 Ether-Verknüpfungen, während polymere Polyether-Verbindungen mehr als 20 Ether-Verknüpfungen umfassen.

Unter dem Begriff "Urethangruppen-freie Polyether-Verbindung" werden im Sinne der vorliegenden Erfindung oligomere oder polymere Polyether-Verbindungen verstanden deren Polymerketten im Wesentlichen frei von Urethangruppen (-NH-CO-O-) sind. Im "Wesentlichen frei" bedeutet, dass der Anteil der Urethangruppen am Molekulargewicht eines Moleküls der oligomeren oder polymeren Polyether-Verbindung weniger als 0,5%, vorzugsweise weniger als 0,25% und besonders bevorzugt weniger als 0,1% beträgt. In einer bevorzugten Ausführungsform der Erfindung ist die oligomere oder polymere Polyether-Verbindung vollkommen frei von Urethangruppen, so dass der Anteil der Urethangruppen am Molekulargewicht jedes Moleküls der oligomeren oder polymeren Polyether-Verbindung 0% beträgt.

Urethangruppen in einer Polymerkette werden in der Regel durch die Umsetzung eines Alkohols mit einem Isocyanat gebildet. Durch die erfindungsgemäße Verwendung der Urethangruppen-freien Polyether-Verbindungen als Schlagzähmodifizierungsmittel kann bei deren Herstellung im Wesentlichen auf die Verwendung von Isocyanat-haltigen Verbindungen verzichtet werden. Darüber hinaus weisen die erfindungsgemäßen polymerisierbaren Zusammensetzungen, die als Zähigkeitsvermittler Urethangruppen-freie Polyether-Verbindungen enthalten, gegenüber vergleichbaren Zusammensetzungen mit Urethangruppen-haltigen Polyether-Verbindungen eine deutlich reduzierte Viskosität auf.

Somit bleibt die Viskosität der erfindungsgemäßen polymerisierbaren Zusammensetzungen niedrig, selbst wenn höhere Mengen an Urethangruppen-freien Polyether-Verbindungen als Schlagzähmodifizierungsmittel verwendet werden.

Die Komponente C2) ist beispielsweise herstellbar durch Umsetzung mindestens einer Komponente X mit mindestens einer Komponente Y, wobei Komponente X ausgewählt wird aus der Gruppe bestehend aus
(X-1) aromatischen Verbindungen mit mindestens zwei aromatischen Hydroxygruppen und
(X-2) Polyethern mit mindestens zwei terminalen Hydroxygruppen
und Komponente Y ausgewählt wird aus der Gruppe bestehend aus
(Y-1) Polyethern mit mindestens zwei terminalen Oxirangruppen und
(Y-2) aromatischen Verbindungen der allgemeinen Formel (II) 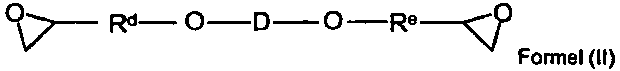 wobei jeder Rest R^{d} und R^{e} jeweils unabhängig voneinander für eine divalente Verbindungsgruppe steht, die 1 bis 100 C-Atome umfasst und Rest D mindestens eine aromatische Gruppe umfasst, mit der Maßgabe, dass die alleinige Umsetzung von einer oder mehrerer Komponente(n), die der Definition von (X-1) genügen, mit einer oder mehrerer Komponente(n), die der Definition von (Y-2) genügen und die alleinige Umsetzung von einer oder mehrerer Komponente, die der Definition von (X-2) genügen, mit einer oder mehrerer Komponenten, die der Definition von (Y-1) genügen, ausgeschlossen ist.

In einer bevorzugten Ausführungsform weist die oligomere oder polymere Urethangruppen-freie Polyether-Verbindung der vorliegenden Erfindung mindestens eine terminale Hydroxygruppe und/oder mindestens eine terminale Oxirangruppe auf. Insbesondere werden alle terminalen Gruppen der oligomeren oder polymeren Urethangruppen-freien Polyether-Verbindung der vorliegenden Erfindung ausgewählt aus aus Hydroxy- und/oder Oxirangruppen.

Bevorzugte oligomere oder polymere Urethangruppen-freie Polyether-Verbindung weisen ein gewichtsmittleres Molekulargewicht von 1000 bis 100000 g/mol, vorzugsweise von 2000 bis 8000 g/mol und besonders bevorzugt von 3000 bis 5000 g/mol auf.

Oligomere oder polymere Urethangruppen-freie Polyether-Verbindung mit einem geringeren gewichtsmittleren Molekulargewicht als 1000 g/mol können in der Harzmatrix als Weichmacher wirken, wodurch Polymerisationsprodukte erhalten werden, die aufgrund ihrer bruchmechanischen Eigenschaften und ihrer vergleichsweise niedrigeren Biegemoduli für die meisten Anwendungszwecke, insbesondere in Verbundwerkstoffen, ungeeignet sind.

Oligomere oder polymere Urethangruppen-freie Polyether-Verbindung mit einem höheren gewichtsmittleren Molekulargewicht als 100000 g/mol zeigen in der Regel eine sehr hohe Viskosität. Es ist daher möglich, dass die vorgenannten Polyether-Verbindungen eine vergleichsweise schlechte Verträglichkeit mit der Harzmatrix aufweisen.

Die oligomere oder polymere Urethangruppen-freie Polyether-Verbindung C2) der vorliegenden Erfindung umfasst ein oder mehrere Strukturelemente der allgemeinen Formel (I), wie vorstehend beschrieben. Der divalente Rest K wird formal durch das Entfernen zweier Hydroxygruppen in aromatischen Dihydroxyverbindungen erhalten. Unter aromatischen Dihydroxyverbindungen werden im Sinne der vorliegenden Erfindung alle Verbindungen verstanden, die zwei Hydroxygruppen umfassen, wobei jede Hydroxygruppe kovalent an ein C-Atom eines aromatischen beziehungsweise heteroaromatischen Ringsystems gebunden ist. Die beiden Hydroxygruppen können dabei sowohl mit demselben oder mit zwei verschiedenen aromatischen beziehungsweise heteroaromatischen Ringsystemen verbunden sein.

Der divalente Rest L wird formal durch das Entfernen zweier terminaler Hydroxygruppen in Polyethern erhalten. Rest L umfasst somit alle divalenten Gruppen, welche die oben beschriebene chemische Struktur aufweisen. Dabei ist offensichtlich, dass die chemische Struktur des Rests L formal auch auf vielen anderen Wegen realisiert werden kann, beispielsweise durch das Entfernen zweier terminaler Aminogruppen in Amino-terminierten Polyethern. Auch solche Reste fallen selbstverständlich unter die oben getroffene Definition des Rests L.

Vorzugsweise wird der divalente Rest L formal durch das Entfernen zweier terminaler Hydroxygruppen in "nicht-aromatische Polyethern" erhalten, wobei unter dem Begriff "nicht-aromatische Polyether" im Sinne der vorliegenden Erfindung Polyether zu verstehen sind, die kein aromatisches Strukturelement umfassen.

In einer weiteren bevorzugten Ausführungsform der Erfindung wird der divalente Rest L formal durch das Entfernen zweier terminaler Hydroxygruppen in Polyalkylenoxiden erhalten, wobei nicht-aromatische Polyalkylenoxide besonders bevorzugt sind.

Die oligomeren oder polymeren urethangruppenfreien Polyether-Verbindungen, die als Rest L von nicht-aromatischen Polyethern und/oder Polyalkylenoxiden abgeleitete Strukturelemente umfassen, zeigen eine besonders gute Wirkung als Schlagzähmodifizierungsmittel.

Für den Fall, dass die oligomere oder polymere Urethangruppen-freie Polyether-Verbindung mehrere Strukturelemente der der allgemeinen Formel **(I)** umfasst, können die genannten Strukturelemente gleich oder verschieden sein und durch eine oder mehrere beliebige Verbindungsgruppen miteinander verbunden werden. Die jeweiligen Verbindungsgruppen sind dabei gleich oder verschieden und werden vorzugsweise ausgewählt aus kovalenten Bindungen und linearen oder verzweigten di-, tri-, tetra-, penta-oder multivalenten Gruppen, die jeweils 1 bis 100 C-Atome umfassen. Vorzugsweise werden die vorgenannten Verbindungsgruppen ausgewählt aus C1-22-Alkylen, insbesondere C6-22-Alkylen, C2-22-Alkenylen, insbesondere C6-22-Alkenylen, C2-22-Alkinylen, insbesondere C6-22-Alkinylen, C5-8-Cycloalkylen, C3-22 Heteroalkylen, C4-22 Heterocycloalkylen, C6-14-Arylen und C6-14-Heteroarylen.

Alle vorgenannten Verbindungsgruppen können jeweils unabhängig voneinander ein- oder mehrfach, insbesondere ein-, zwei- oder dreifach, vorzugsweise einfach, substituiert sein, insbesondere durch Substituenten ausgewählt aus Halogen, insbesondere Chlor, Brom oder Fluor, Trifluormethyl, C1-18-Alkyl, C3-8-Cycloalkyl, C2-18-Alkenyl, C2-18-Alkinyl, Heteroalkyl, Heterocycloalkyl, C1-18-Alkoxy, C1-18-Alkylsulfanyl, C1-18-Alkylsulfonyl, C1-18-Alkylsulfoxidyl, C1-18-Alkanoyl, C1-18-Alkanoyloxy, C1-18-Alkoxycarbonyl, C1-18-Alkylaminocarbonyl, C1-18-Alkylsulfanylcarbonyl, Sulfanyl, Cyan, Amino, Heteroaryl, Heteroaryl-C1-12-alkyl, Heteroaryloxy, Heteroarylamino, Heteroarylsulfanyl, Heteroarylsulfonyl, Heteroarylsulfoxidyl, Heteroarylcarbonyl, Heteroarylcarbonyloxy, Heteroaryloxycarbonyl, Heteroarylaminocarbonyl, Heteroarylsulfanylcarbonyl, C1-18-Alkoxysulfonyl, C1-18-Alkoxycarbinol, Sulfo, Sulfino, Sulfeno, Formyl, Thioformyl, bevorzugt durch Halogen, C1-18-Alkyl, C2-18-Alkenyl, C2-18-Alkinyl und C1-18-Alkoxy.

In einer bevorzugten Ausführungsform beträgt der Anteil des Rests K an der Gesamtanzahl aller Reste A in der oligomeren oder polymeren Urethangruppen-freien Polyether-Verbindung 30 bis 70%, vorzugsweise 40 bis 60% und insbesondere 45 bis 55%. Oligomere oder polymere Urethangruppen-freie Polyether-Verbindung mit den vorgenannten Anteilen an Resten K weisen eine besonders gute Verträglichkeit mit der Epoxidharzmatrix auf.

In einer weiteren bevorzugten Ausführungsform beträgt der Anteil des Rests L an der Gesamtanzahl aller Reste A in der oligomeren oder polymeren Urethangruppen-freien Polyether-Verbindung 30 bis 70%, vorzugsweise 40 bis 60% und insbesondere 45 bis 55%. Oligomere oder polymere Urethangruppen-freie Polyether-Verbindung mit den vorgenannten Anteilen an Resten L zeigen eine vergleichsweise niedrigere Glasübergangstemperatur Tg und eine reduzierte Viskosität, wodurch polymerisierbare Zusammensetzungen erhalten werden, die eine besonders gute Verarbeitbarkeit aufweisen.

Durch die geeignete Wahl der prozentualen Anteile der Reste K und L kann die Verträglichkeit, die Viskosität und die Glasübergangstemperatur der oligomeren oder polymeren Urethangruppen-freien Polyether-Verbindung genau eingestellt werden.

Durch die prozentualen Verhältnisse der Reste K und L in der oligomeren oder polymeren Urethangruppen-freien Polyether-Verbindung kann in Abhängigkeit von dem verwendeten Epoxidharz oder der verwendeten Mischung verschiedener Epoxidharze weiterhin die Schlagzähigkeit, die Biegeeigenschaften und die nach der Aushärtung gebildete Mikrostruktur der erfindungsgemäßen Polymerisationsprodukte gezielt gesteuert werden.

Im Rahmen der Erfindung sind insbesondere solche oligomeren oder polymeren Urethangruppen-freien Polyether-Verbindungen bevorzugt, in denen der Anteil aller Strukturelemente der Formel (I) am gewichtsmittleren Molekulargewicht der oligomeren oder polymeren Urethangruppen-freien Polyether-Verbindung 40 bis 99,99 %, vorzugsweise 70 bis 99 % und insbesondere 85 bis 98 % beträgt.

Oligomere oder polymere Urethangruppen-freie Polyether-Verbindung mit den vorgenannten Anteilen an Strukturelementen der Formel (I) erlauben eine besonders effektive Schlagzähmodifizierung der ausgehärteten erfindungsgemäßen polymerisierbaren Zusammensetzungen.

Die einzelnen Strukturelemente der allgemeinen Formel (I) können dabei so angeordnet bzw. verknüpft sein, dass sie eine lineare oligomere oder polymere urethangruppenfreie Polyether-Verbindung der vorliegenden Erfindung bilden und/oder Bestandteil einer solchen Verbindung sind.

Alternativ dazu können die einzelnen Strukturelemente der allgemeinen Formel (I) so angeordnet bzw. verknüpft sein, dass sie eine verzweigte oligomere oder polymere urethangruppenfreie Polyether-Verbindung der vorliegenden Erfindung bilden und/oder Bestandteil einer solchen Verbindung sind.

Bevorzugte oligomere oder polymere Urethangruppen-freie Polyether-Verbindungen werden im Rahmen der vorliegenden Erfindung ausgewählt aus Verbindungen der allgemeinen Formel (III), 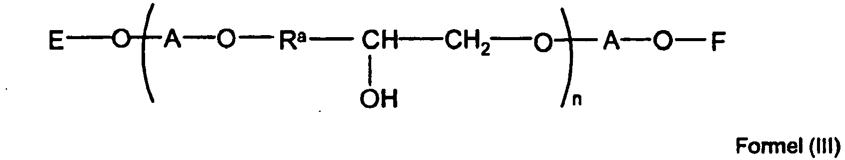 wobei E ausgewählt wird aus Wasserstoff oder Resten der allgemeinen Formel (IV), 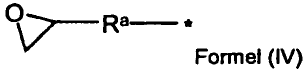 F ausgewählt wird aus Wasserstoff oder Resten der allgemeinen Formel (V). 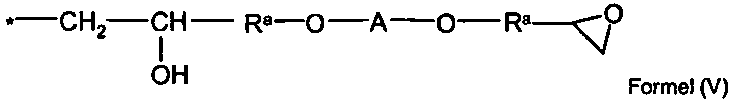 n in Formel **(III)** eine Zahl von 5 bis 10000 ist, jeder Rest R^{a} in jeder Wiederholungseinheit und in den Fomeln **(III),** (IV) und (V) unabhängig voneinander für eine divalente Verbindungsgruppe steht, die 1 bis 100 C-Atome umfasst und jeder Rest A in jeder Wiederholungseinheit und in Formel (V) unabhängig voneinander ausgewählt wird aus K oder L, wobei K für einen divalenten Rest von aromatischen Dihydroxyverbindungen nach Entfernen der beiden Hydroxygruppen steht und L für einen divalenten Rest von Polyethern nach Entfernen zweier terminaler Hydroxygruppen steht,
wobei, bezogen auf die Gesamtanzahl aller Reste A in der oligomeren oder polymeren Urethangruppen-freien Polyether-Verbindung, 20 bis 80% aller Reste A für K und 20 bis 80% aller Reste A für L stehen.

Durch die Anzahl der Wiederholungseinheiten können die Eigenschaften der Urethangruppen-freien Polyether-Verbindung verändert werden, wodurch es möglich ist, die vorgenannten Polyether gezielt an eine bestimmte Epoxidmatrix anzupassen. Vorzugsweise steht in Formel (I) und (III) daher n für eine Zahl von 3 bis 20, besonders bevorzugt für eine Zahl von 5 bis 15 und überaus bevorzugt für eine Zahl von 7 bis 10.

In bevorzugten Ausführungsformen der vorliegenden Erfindung wird jeder Rest R^{a} in Formel (I), (III), (IV) und/oder (V) unabhängig voneinander ausgewählt aus Alkylengruppen, die 1 bis 10 C-Atome umfassen. Insbesondere wird R^{a} aus linearen Alkylengruppen ausgewählt, die 1 bis 6, insbesondere 1 oder 2 Kohlenstoffatome umfassen, wie beispielsweise Methylen-, und Ethylengruppen, wobei R^{a} in den oben genannten Formeln besonders bevorzugt für eine Methylengruppe steht.

Die Urethangruppen-freien Polyether-Verbindungen der vorliegenden Erfindung gemäß den Formeln (I), **(III)** und/oder (V) können insbesondere aus aromatischen Substanzen mit mindestens zwei aromatischen Hydroxygruppen und/oder Polyether mit mindestens zwei terminalen Hydroxygruppen hergestellt werden werden. Die Verwendung der vorgenannten Substanzen ist vorteilhaft, da diese kostengünstig herstellbar oder kommerziell in einer großen Strukturvielfalt verfügbar sind.

Besonders vorteilhaft ist es, wenn bei der Herstellung der Urethangruppen-freien Polyether-Verbindungen der vorliegenden Erfindung Substanzen mit terminalen Oxirangruppen verwendet werden. Die Verwendung der vorgenannten Substanzen ist vorteilhaft, da diese kostengünstig herstellbar und kommerziell in einer großen Strukturvielfalt verfügbar sind.

Der divalente Rest K wird formal durch das Entfernen zweier Hydroxygruppen in aromatischen Dihydroxyverbindungen erhalten. Bevorzugte Reste K werden dabei in jeder Wiederholungseinheit und in jeder der Formeln (I), (III) und ggf. (V) unabhängig voneinander ausgewählt aus divalenten Resten der allgemeinen Formel (VI) und/oder Formel (VII), 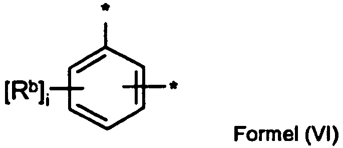 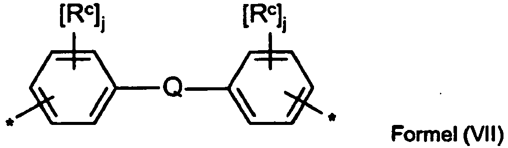 wobei Q ausgewählt wird aus Alkylen, Sauerstoff, Schwefel, Sulfoxid, Sulfon und einer direkten, kovalenten Bindung und i und j unabhängig voneinander für eine Zahl von 0 bis 4 stehen, insbesondere für 0 oder 1 stehen.

Sofern vorhanden, werden die Reste R^{b} und R^{c}, die jeweils ein Wasserstoffatom des aromatischen Ringsystems ersetzen, unabhängig voneinander ausgewählt aus Halogen, insbesondere Fluor, Chlor, Brom oder lod, C1-40 Alkyl, etwa Methyl, Ethyl, lospropyl, C2-40 Alkenyl, C1-40Alkoxyl und C7-13 Aralkyl. Rest R^{b} in Formel (V) kann auch ein divalenter Rest sein, der aus der Phenylgruppe eine entsprechende Naphthylgruppe macht. In bestimmten Ausführungsformen der vorliegenden Erfindung können die Reste R^{b} und R^{c}, sofern vorhanden, mindestens ein weiteres Strukturelement der allgemeinen Formel **(I)** umfassen.

Unter einer "Alkylengruppe Q" werden im Rahmen der vorliegenden Erfindung divalente Alkylreste verstanden, das heißt Alkyle, die an beiden Seiten noch eine Bindung eingehen können. Bevorzugte Alkylenreste sind beispielsweise substituierte oder unsubstituierte, gesättigte oder ungesättigte Alkylenreste mit 1 bis 40 C-Atomen. Bevorzugte Verbindungen sind ausgewählt aus beispielsweise -CH₂ (Methylen), -CH₂-CH₂-(Ethylen), -CH₂-CH₂-CH₂-(Propylen), -CH₂-CH₂CH₂-CH₂ (Butylen), -CH₂-CH₂ CH₂-CH₂-CH₂-(Hexylen), -CH₂-CH₂-CH₂-CH₂-CH₂-CH₂- (Heptylen), -CH₂-CH₂-CH₂-CH₂-CH₂-CH₂-CH₂ CH₂- (Octylen), aber auch die verzweigten Derivate davon, wie iso-Propylen, tert-Butylen.

Die Alkylengruppe Q kann einfach oder mehrfach substituiert vorliegen. Geeignete Substituenten können beispielsweise ausgewählt werden aus Halogen, insbesondere Chlor, Brom oder Fluor, Trifluormethyl, C1-18-Alkyl, C3-8-Cycloalkyl, C2-18-Alkenyl, C2-18-Alkinyl, Heteroalkyl, Heterocycloalkyl, C1-18-Alkoxy, C1-18-Alkylsulfanyl, C1-18-Alkylsulfonyl, C1-18-Alkylsulfoxidyl, C1-18-Alkanoyl, C1-18-Alkanoyloxy, C1-18-Alkoxycarbonyl, C1-18-Alkylaminocarbonyl, C1-18-Alkylsulfanylcarbonyl, Sulfanyl, Cyan, Heteroaryl, Heteroaryl-C1-12-alkyl, Heteroaryloxy, Heteroarylamino, Heteroarylsulfanyl, Heteroarylsulfonyl, Heteroarylsulfoxidyl, Heteroarylcarbonyl, Heteroarylcarbonyloxy, Heteroaryloxycarbonyl, Heteroarylaminocarbonyl, Heteroarylsulfanylcarbonyl, C1-18-Alkoxysulfonyl, C1-18-Alkoxycarbinol, Sulfo, Sulfino, Sulfeno, Formyl, Thioformyl, bevorzugt durch Halogen, C1-18-Alkyl, C2-18-Alkenyl, C2-18-Alkinyl und C1-18-Alkoxy.

Geeignete kommerziell verfügbare aromatische Dihydroxyverbindungen, aus denen der divalente Rest K durch Entfernen zweier aromatischer Hydroxygruppen erhalten werden kann, sind im Folgenden beispielhaft aufgeführt: Hydrochinon, Naphthalindiole, wie etwa 1,2-Napthalindiol, 2,6-Napthalindiol, 2,7-Napthalindiol, Bis-(4-hydroxyphenyl), 2,2-Bis-(4-hydroxyphenyl)-propan, Bis-(4-hydroxyphenyl)-sulfid, Bis-(4-hydroxyphenyl)-ether, Bis-(4-hydroxyphenyl)-keton, Bis-(4-hydroxyphenyl)-sulfon, Bis-(4-hydroxyphenyl)-methan, 1,1-Bis-(4-hydroxyphenyl)-cyclohexan, α,α'-Bis-(4-hydroxyphenyl)-p-diisopropylbenzol, 1,1-Bis-(4-hydroxyphenyl)-1-phenyl-ethan, 2,2-Bis-(3-methyl-4-hydroxyphenyl)-propan, 2,2-Bis-(3,5-dichlor-4-hydroxyphenyl)-propan, 2,2-Bis-(3,5-dibrom-4-hydroxyphenyl)-propan, 2,2-Bis-(3,5-dimethyl-4-hydroxyphenyl)-propan, Bis-(3,5-dimethyl-4-hydroxyphenyl)-methan, 2,2-Bis-(3,5-dimethyl-4-hydroxyphenyl)-butan, Bis-(3,5-dimethyl-4-hydroxyphenyl) und 1,1,3,4,6-Pentamethyl-3-(3,5-dimethyl-4-hydroxyphenyl)-indan-5-ol, besonders bevorzugt Bis-(4-hydroxyphenyl), 2,2-Bis-(4-hydroxyphenyl) propan und 2,2-Bis-(3,5-dimethyl-4-hydroxyphenyl)-propan, Bisphenol TMC, ganz besonders bevorzugt 2,2-Bis-(4-hydroxyphenyl)-propan.

Der divalente Rest L wird formal durch das Entfernen zweier terminaler Hydroxygruppen in Polyethern erhalten. Bevorzugte Reste L werden dabei in jeder Wiederholungseinheit und in jeder der Formeln (I), **(III)** und ggf. (V) unabhängig voneinander ausgewählt aus divalenten Resten der allgemeinen Formel (VIII), 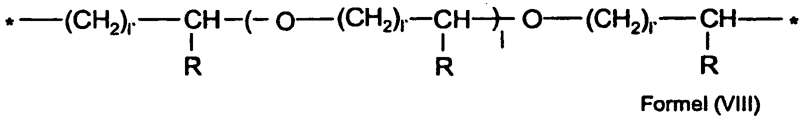 wobei I eine Zahl von 0 bis 5000 ist, jedes I' in Formel (VIII) und in jeder Wiederholungseinheit unabhängig voneinander für eine Zahl von 1 bis 10 steht und jedes R in Formel (VIII) und in jeder Wiederholungseinheit unabhängig voneinander ausgewählt wird aus Wasserstoff oder linearen oder verzweigten gegebenenfalls substituierten C1-12 Alkylgruppen, wobei R insbesondere für Wasserstoff oder Methyl steht.

In bevorzugten divalenten Resten der allgemeinen Formel (VIII) steht I für eine Zahl von 1 bis 200, vorzugsweise für eine Zahl von 3 bis 50 und besonders bevorzugt für eine Zahl von 5 bis 20 und/oder I' steht in Formel (VIII) und in jeder Wiederholungseinheit unabhängig voneinander für 1, 2, 3, 4, 5, 6, 7 oder 8, insbesondere für 1 oder 3.

Um eine effektive Schlagzähmodifizierung zu erreichen, ist es vorteilhaft, dass jeder Rest L vor dem Entfernen zweier terminaler Hydroxylgruppen ein gewichtsmittteres Molekulargewicht (M_{w}) von 200 bis 10000 g/mol, vorzugsweise von 300 bis 5000 g/mol und insbesondere von 500 bis 2000 g/mol aufweist. Weiterhin ist es vorteilhaft, dass jeder Rest L vor dem Entfernen zweier terminaler Hydroxylgruppen eine Glasübergangstemperatur (T_{g}) aufweist, die kleiner ist als 20°C, vorzugsweise kleiner ist als 10°C und besonders bevorzugt kleiner ist als 0°C.

Im Rahmen der vorliegenden Erfindung kann das gewichtsmittlere Molekulargewicht (M_{w}) mittels Gelpermeationschromatographie (GPC) mit Polystyrol als Standard bestimmt werden. Die Glasübergangstemperatur (T_{g}) kann im Rahmend der vorliegenden Erfindung durch Dynamisch-Mechanische Thermo-Analyse (DMTA) bestimmt werden, wobei die jeweilige Glasübergangstemperatur aus dem Maximalwert des Verlustmoduls vs. Temperatur Diagramm erhalten wird.

Wie weiter oben angegeben, ist die Komponente C2) herstellbar durch Umsetzung mindestens einer Komponente X mit mindestens einer Komponente Y, wobei Komponente X ausgewählt wird aus der Gruppe bestehend aus
(X-1) aromatischen Verbindungen mit mindestens zwei aromatischen Hydroxygruppen und
(X-2) Polyethern mit mindestens zwei terminalen Hydroxygruppen
und Komponente Y ausgewählt wird aus der Gruppe bestehend aus
(Y-1) Polyethern mit mindestens zwei terminalen Oxirangruppen und
(Y-2) aromatischen Verbindungen der oben angegebenen allgemeinen Formel (II).

Bei der Herstellung der oligomeren oder polymeren Urethangruppen-freien Polyether-Verbindung wird/werden somit eine oder mehrere Komponente(n) X mit einer oder mehreren Komponente(n) Y umgesetzt, wobei alte verwendeten Komponenten eine unterschiedliche chemische Struktur aufweisen.

Unter dem Begriff "alleinige Umsetzung" wird im Sinne der vorliegenden Erfindung verstanden, dass die Umsetzung zweier Komponenten erfolgt, ohne dass bei der Umsetzung mindestens eine Komponente zugegen ist, die keiner der Definitionen der vorgenannten Komponenten genügt.

Somit ist im Sinne der vorliegenden Erfindung die Umsetzung einer oder mehrerer Komponente(n), die der Definition von (X-1) genügen, mit einer oder mehrerer Komponente(n), die der Definition von (Y-2) genügen, nur für den Fall ausgeschlossen, dass bei der Umsetzung keine Komponente zugegen ist, die jeweils der Definition von (X-1) und (Y-2) nicht genügt.

Weiterhin ist im Sinne der vorliegenden Erfindung die Umsetzung einer oder mehrerer Komponenten, die der Definition von (X-2) genügen, mit einer oder mehrerer Komponenten, die der Definition von (Y-1) genügen, nur für den Fall ausgeschlossen, dass bei der Umsetzung keine Komponente zugegen ist, die jeweils der Definition von (X-2) und (Y-1) nicht genügt.

Die vorgenannten alleinigen Umsetzungen sind im Rahmen der vorliegenden Erfindung ausgeschlossen, da die resultierenden Umsetzungsprodukte die bruchmechanischen Eigenschaften der gehärteten polymerisierbaren Zusammensetzungen nur unzureichend verbessern. Es erscheint im Sinne der vorliegenden Erfindung somit erforderlich zu sein, dass die oligomeren oder polymeren Urethangruppenfreien Polyether-Verbindungen sowohl aromatische als auch Polyether-basierte Strukturelemente umfassen, um effektiv als Zähigkeitsvermittler in einer gehärteten Epoxidharz-Matrix wirksam zu sein.

Bei der Umsetzung der einzelnen Komponenten miteinander reagieren insbesondere Hydroxygruppen einer Komponente mit terminalen Oxirangruppen einer anderen Komponente unter Bildung einer oligomeren oder polymeren, Urethangruppen-freien Polyether-Verbindung.

Die beschriebene Umsetzung erfolgt dabei in Abhängigkeit von der Reaktivität der einzelnen Komponenten vorzugsweise bei Temperaturen von 20 bis 250°C, etwa bei 100°C bis 180°C. Die Reaktionszeit hängt ebenfalls von der Reaktivität der verwendeten Komponenten ab und beträgt vorzugsweise 10 min bis 12 h, insbesondere 1 h bis 6 h, wobei die Reaktion in einem geeigneten Lösungsmittel, wie beispielsweise Toluol oder ohne Lösungsmittel durchgeführt werden kann.

In einer bevorzugten Ausführungsform der vorliegenden Erfindung wird die Umsetzung der einzelnen Komponenten in Gegenwart mindestens eines geeigneten Katalysators durchgeführt. Geeignete Katalysatoren beschleunigen die Reaktion von Hydroxygruppen mit terminalen Oxirangruppen und werden dabei insbesondere ausgewählt aus Tetraalkylammoniumsalzen, wie beispielsweise Tetrabutylammoniumbromid, tertiären Aminen, wie beispielsweise 1,8-Diazabicycclo[5.4.0]undec-7-en (DBU), Aryl/Alkyl-phosphinen, wie beispielsweise Triphenylphosphin oder Harnstoffen, wie beispielsweise Versamin EH-50.

In einer weiteren bevorzugten Ausführungsform der vorliegenden Erfindung wird die Umsetzung der einzelnen Komponenten in Gegenwart mindestens eines Vernetzungsmittels durchgeführt. Geeignete Vemetzungsmittel können beispielsweise ausgewählt werden aus Diolen, Triolen, Tetraolen und Polyolen, die mindestens fünf Hydroxylgruppen aufweisen.

Bevorzugte Komponenten (X-1) werden im Rahmen der vorliegenden Erfindung aus Verbindungen der allgemeinen Formel ((VIIa) ausgewählt, 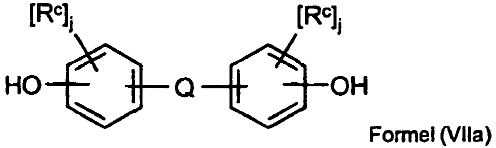 wobei die weiter oben zu Formel (VII) angegebenen Definitionen gelten

Weiterhin können bevorzugte Komponenten (X-1) auch aus Verbindungen der allgemeinen Formel (VIa) ausgewählt werden, 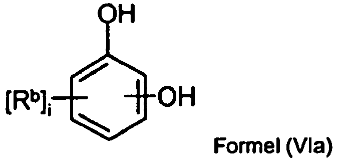 wobei i für eine Zahl von 0 bis 4 steht und R^{b} ausgewählt wird Halogen, insbesondere Fluor, Chlor, Brom oder lod, C1-40 Alkyl, etwa Methyl, Ethyl, lospropyl, C2-40 Alkenyl, C1-40 Alkoxyl und C7-13 Aralkyl. Rest R^{b} in Formel (VIa) kann auch ein divalenter Rest sein, der aus der Phenylgruppe eine entsprechende Naphthylgruppe macht. In bestimmten Ausführungsformen der vorliegenden Erfindung können die Reste R^{b} und R^{c}, sofern vorhanden, mindestens ein weiteres Strukturelement der allgemeinen Formel (I) umfassen.

Insbesondere ist es im Rahmen der vorliegenden Erfindung vorteilhaft, die Komponente (X-1) aus aromatischen Verbindungen mit zwei aromatischen Hydroxygruppen auszuwählen. Geeignete aromatische Verbindungen mit zwei aromatischen Hydroxygruppen sind beispielsweise Hydrochinon, Naphthalindiole, wie etwa 1,2-Napthalindiol, 2,6-Napthalindiol, 2,7-Napthalindiol, Bis-(4-hydroxyphenyl), 2,2-Bis-(4-hydroxyphenyl)-propan, Bis-(4-hydroxyphenyl)-sulfid, Bis-(4-hydroxyphenyl)-ether, Bis-(4-hydroxyphenyl)-keton, Bis-(4-hydroxyphenyl)-sulfon, Bis-(4-hydroxyphenyl)-methan, 1,1-Bis-(4-hydroxyphenyl)-cyclohexan, α,α'-Bis-(4-hydroxyphenyl)-p-diisopropylbenzol, 1,1-Bis-(4-hydroxyphenyl)-1-phenyl-ethan, 2,2-Bis-(3-methyl-4-hydroxyphenyl)-propan, 2,2-Bis-(3,5-dichlor-4-hydroxyphenyl)-propan, 2,2-Bis-(3,5-dibrom-4-hydroxyphenyl)-propan, 2,2-Bis-(3,5-dimethyl-4-hydroxyphenyl)-propan, Bis-(3,5-dimethyl-4-hydroxyphenyl)-methan, 2,2-Bis-(3,5-dimethyl-4-hydroxyphenyl)-butan, Bis-(3,5-dimethyl-4-hydroxyphenyl) und 1,1,3,4,6-Pentamethyl-3-(3,5-dimethyl-4-hydroxyphenyl)-indan-5-ol, besonders bevorzugt Bis-(4-hydroxyphenyl), 2,2-Bis-(4-hydroxyphenyl)-propan und 2,2-Bis-(3,5-dimethyl-4-hydroxyphenyl)-propan, Bisphenol TMC, ganz besonders bevorzugt 2,2-Bis-(4-hydroxyphenyl)-propan Komponente (X-2) steht für Polyether mit mindestens zwei terminalen Hydroxygruppen.

In einer bevorzugten Ausführungsform der Erfindung wird Komponente (X-2) aus nicht-aromatischen Polyethern mit mindestens zwei terminalen Hydroxygruppen ausgewählt. Unter dem Begriff "nicht-aromatische Polyether" sind im Sinne der vorliegenden Erfindung Polyether zu verstehen, die kein aromatisches Strukturelement umfassen.

Bevorzugte Komponenten (X-2) werden aus Verbindungen der allgemeinen Formel (IX) ausgewählt, 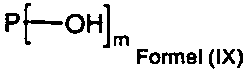 wobei m eine Zahl von 2 bis 100 ist und P für einen m-valenten Polyalkylenoxidrest steht, wie beispielsweise einen m-valenten nicht-aromatischen Polyalkylenoxidrest. Vorzugsweise ist m eine Zahl von 2 bis 50, besonders bevorzugt von 2 bis 10 und ganz besonders bevorzugt von 2 bis 4, wobei m insbesondere für 2 steht. Der m-valenten Polyalkylenoxidrest P kann dabei eine lineare oder verzweigte Struktur aufweisen.

Durch die Verwendung von Polyethern mit zwei terminalen Hydroxygruppen als Komponente (X-2) können oligomere oder polymere Urethangruppen-freie Polyether-Verbindung mit linearer Struktur aufgebaut werden, die eine gute Verträglichkeit zur Epoxidharz-Matrix aufweisen.

Durch die Verwendung von Polyethern mit mehrals zwei terminalen Hydroxygruppen als Komponente (X-2) können oligomere oder polymere urethangruppenfreie Polyether-Verbindung mit verzweigter Struktur aufgebaut werden.

Geeignete Komponenten (X-2) können beispielsweise ausgewählt werden aus Verbindungen der allgemeinen Formel (VIIIa), 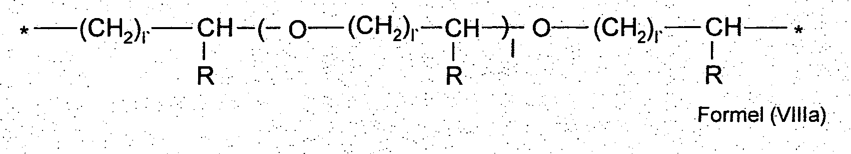 wobei anstelle des Symbols * eine OH-Gruppe steht und die weiter oben im Zusammenhang mit Formel (VIII) angegebenen Definitionen gelten.

Komponente (Y-1) steht für Polyether mit mindestens zwei terminalen Öxirangrüppen. In einer bevorzugten Ausführungsform der Erfindung wird Komponenten (Y-1) aus nicht-aromatischen Polyethern mit mindestens zwei terminalen Oxirangruppen-ausgewählt. Der Begriff "nicht-aromatische Polyether" ist dabei wie oben definiert:

Vorzugsweise wird Komponente (Y-1) ausgewählt aus Verbindungen der allgemeinen Formel (X), 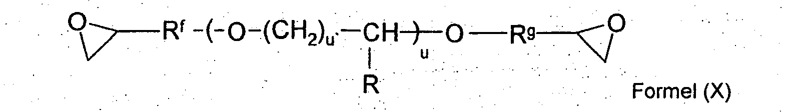 wobei u eine Zahl von 2 bis 5000 ist, jedes u in jeder Wiederholungseinheit unabhängig voneinander für eine Zahl von 1 bis 10 steht, jeder Rest Rf und R⁹ jeweils unabhängig voneinander für eine divalente Verbindungsgruppe steht, die 1 bis 100 C-Atome umfasst, und jedes R in Formel (X) und in jeder Wiederholungseinheit unabhängig voneinander ausgewählt wird aus Wasserstoff oder linearen oder verzweigten gegebenenfalls substituierten C1-12 Alkylgruppen, wobei R insbesondere für Wasserstoff oder Methyl steht.

Insbesondere steht u in Formel (X) für eine Zahl von 1 bis 200, vorzugsweise für eine Zahl von 3 bis 50 und besonders bevorzugt für eine Zahl von 5 bis 20 und/oder u' steht in Formel (X) und in jeder Wederholungseinheit unabhängig voneinander für 1, 2, 3, 4, 5, 6, 7 oder 8, insbesondere für 1 oder 3.

In bevorzugten Ausführungsformen der vorliegenden Erfindung werden die Reste R^{f} und R^{g} in Formel (X) unabhängig voneinander ausgewählt aus Alkylengruppen, die 1 bis 10 C-Atome umfassen. Insbesondere werden die Reste R^{f} und R⁹ in Formel (X) unabhängig voneinander ausgewählt aus linearen Alkylengruppen, die 1 bis 6, insbesondere 1 oder 2 Kohlenstoffatome umfassen, wie beispielsweise Methylen-, und Ethylengruppen, wobei R^{f} und R^{g} besonders bevorzugt für eine Methylengruppe (-CH₂-) stehen.

Als Komponente (Y-1) geeignete Diglycidylether von Polyethern sind beispielsweise unter den Handelsbezeichnungen DER-732, DER-736 (Dow Chemical Co.) oder unter Adeka ED-506 (Adeka Corporation) erhältlich oder durch die dem Fachmann bekannte Umsetzung von Polyetherpolyolen mit Epichlorhydrin herstellbar.

Die Komponente (Y-2) ist, wie weiter oben angegeben, eine aromatische Verbindung der allgemeinen Formel (II). In einer bevorzugten Ausführungsform der Erfindung wird Komponente (Y-2) ausgewählt aus Verbindungen der allgemeinen Formel (XI), wobei 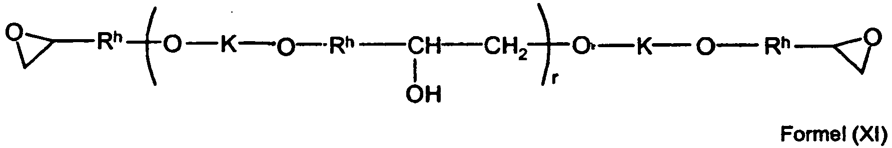 r eine Zahl von 0 bis 10 ist, R^{h} in Formel (XI) und in jeder Wiederholungseinheit unabhängig voneinander ausgewählt wird aus Alkylengruppen, die 1 bis 10 C-Atome umfassen und K in Formel (XI) und in jeder Wiederholungseinheit unabhängig voneinander für einen divalenten Rest von aromatischen Dihydroxyverbindungen nach Entfernen der beiden Hydroxygruppen steht.

In einer bevorzugten Ausführungsform der Erfindung ist r eine Zahl von 0 bis 2, insbesondere von 0 bis 1, wie beispielsweise 0,0,1, 0,2,0,3,0,4, 0,5,0,6,0,7,0,8,0,9,1.

R^{h} wird insbesondere ausgewählt aus linearen Alkylengruppen, die 1 bis 6 Kohlenstoffatome, insbesondere 1 oder 2 Kohlenstoffatome umfassen, wie beispielsweise Methylen-, und Ethylengruppen, wobei R^{f} besonders bevorzugt für eine Methylengruppe (-CH₂-) steht.

Der divalente Rest K wird formal durch das Entfernen zweier Hydroxygruppen in aromatischen Dihydroxyverbindungen erhalten. Bevorzugte Reste K wurden weiter oben durch die allgemeinen Formel (VI) und (VII) definiert.

Als Komponente (Y-2) sind insbesondere Diglycidylether von Bisphenol A oder Bisphenol F geeignet, die beispielsweise unter den Handelsbezeichnungen Epon 825, Epon 826, Epon 828, Epon 830, Epon 862, Epon 1001(Hexion Specialty Chemicals Inc.) oder DER-331, DER-332, DER-334 (Dow Chemical Co.) erhältlich sind.

Die vorgenannten Verbindungen können auch durch die Umsetzung einer oder mehrerer geeigneter bisphenolischer Verbindungen mit Epichlorhydrin hergestellt werden.

Weiterhin kann Komponente (Y-2) aus Verbindungen ausgewählt werden, in denen der Rest D in Formel (II) mindestens eine aromatische Gruppe umfasst, die mindestens eine funktionelle Gruppe der folgenden Formel aufweist, 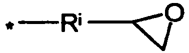 wobei R¹ für eine divalente Verbindungsgruppe steht, die 1 bis 100 C-Atome umfasst. Insbesondere steht Rⁱ für eine Alkylengruppe mit 1 bis 10 C-Atomen, wie beispielsweise Methylen oder Ethylen.

Geeignete Reste D in Formel (II) können beispielsweise aus den folgenden aromatischen Resten ausgewählt werden, 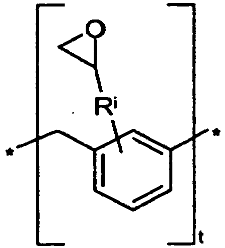 wobei Rⁱ wie oben definiert ist und t eine Zahl von 1 bis 100.000, insbesondere von 1 bis 10.000, besonders bevorzugt von 1 bis 1.000 ist.

Entsprechende Komponenten (Y-2) sind beispielsweise Glycidylether von Phenolharzen, wie beispielsweise Glycidylether von Novolakharzen.

In einer bevorzugten Ausführungsform der vorliegenden Erfindung wird die oligomere oder polymere Urethangruppen-freie Polyether-Verbindung durch Umsetzung mindestens einer Komponente (X-1) mit mindestens einer Komponente (Y-1) in Gegenwart mindestens einer Komponente (Y-2) erhalten.

Die so erhaltenen oligomeren oder polymeren Urethangruppen-freie Polyether-Verbindungen weisen gegenüber vergleichbaren Produkten, die durch die alleinige Umsetzung mindestens einer Komponente (X-1) mit mindestens einer Komponente (Y-1) erhalten werden, eine höhere Effektivität als Schlagzähmodifizierungsmittel auf.

Das molare Verhältnis der einzelnen vorgenannten Komponenten wird bei der Umsetzung vorzugsweise so gewählt, dass die erhaltene oligomere oder polymere Urethangruppen-freie Polyether-Verbindung ausschließlich terminale Oxirangruppen aufweist.

Im Sinne der vorliegenden Erfindung ist es vorteilhaft, wenn mindestens eine oligomere oder polymere urethangruppenfreie Polyether-Verbindung durch Umsetzung mindestens einer Komponente A mit mindestens einer Komponente B hergestellt wird, wobei Komponente A ausgewählt wird aus der Gruppe bestehend aus
- (X-1) aromatischen Verbindungen mit mindestens zwei aromatischen Hydroxygruppen und
- (X-2) nicht-aromatischen Polyethern mit mindestens zwei terminalen Hydroxygruppen,
   und Komponente B ausgewählt wird aus der Gruppe bestehend aus
- (Y-1) nicht-aromatischen Polyethern mit mindestens zwei terminalen Oxirangruppen und
- (Y-2) aromatischen Verbindungen der allgemeinen Formel (II) 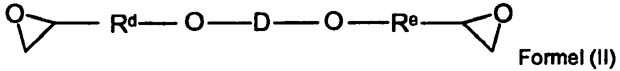
wobei jeder Rest R^{d} und R^{e} jeweils unabhängig voneinander für eine divalente Verbindungsgruppe steht, die 1 bis 100 C-Atome umfasst, und Rest D mindestens eine aromatische Gruppe umfasst, mit der Maßgabe, dass die alleinige Umsetzung von einer oder mehrerer Komponente(n), die der Definition von (X-1) genügen, mit einer oder mehrerer Komponente(n), die der Definition von (Y-2) genügen und die alleinige Umsetzung von einer oder mehrerer Komponente(n), die der Definition von (X-2) genügen, mit einer oder mehrerer Komponente(n), die der Definition von (Y-1) genügen, ausgeschlossen ist.

Wie oben definiert sind unter dem Begriff "nicht-aromatische Polyether" im Sinne der vorliegenden Erfindung Polyether zu verstehen, die kein aromatisches Strukturelement umfassen.

Die vorgenannte oligomere oder polymere urethangruppenfreie Polyether-Verbindung erlaubt die Herstellung polymerisierbarer Zusammensetzungen, die im ausgehärteten Zustand besonders gute bruchmechanische Eigenschaften aufweisen.

Es ist im Sinne der vorliegenden Erfindung insbesondere vorteilhaft, mindestens eine Komponente (X-1), ausgewählt aus Verbindungen der allgemeinen Formel (VIIb), 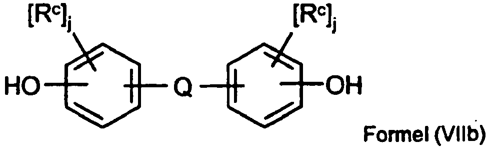 wobei j für eine Zahl von 0 bis 4 steht; Q ausgewählt wird aus der Gruppe bestehend aus Alkylen, Sauerstoff, Schwefel Sulfoxid, Sulfon und einer direkten, kovalenten Bindung und jeder Rest R^{c} unabhängig voneinander ausgewählt wird aus Halogen, insbesondere Fluor, Chlor, Brom oder lod, C1-40 Alkyl, etwa Methyl, Ethyl, lospropyl, C2-40 Alkenyl, C1-40 Alkoxyl und C7-13 Aralkyl, mit mindestens einer Komponente (Y-1), ausgewählt aus Verbindungen der allgemeinen Formel (Xa), 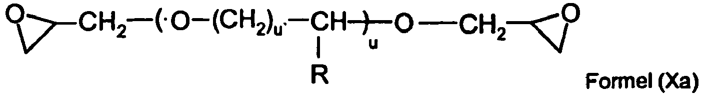 wobei u eine Zahl von 2 bis 5000 ist, jedes u in jeder Wiederholungseinheit unabhängig voneinander für eine Zahl von 1 bis 10 steht und jedes R in Formel (Xa) und in jeder Wiederholungseinheit unabhängig voneinander ausgewählt wird aus Wasserstoff oder linearen oder verzweigten gegebenenfalls substituierten C1-12 Alkylgruppen, wobei R insbesondere für Wasserstoff oder Methyl steht, in Gegenwart mindestens einer Komponente (Y-2) umzusetzen, wobei Komponente (Y-2) ausgewählt wird aus Verbindungen der allgemeinen Formel (Xla), 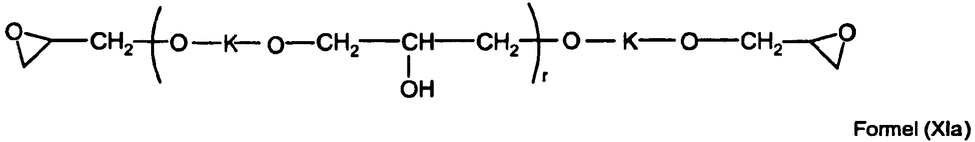 wobei r eine Zahl von 0 bis 10 ist und K in Formel (Xla) und in jeder Wiederholungseinheit unabhängig voneinander für einen divalenten Rest von aromatischen Dihydroxyverbindungen nach Entfernen der beiden Hydroxygruppen steht.

Das molare Verhältnis der Komponente (X-1) zur Komponente Y (Y-1+Y-2) liegt dabei insbesondere zwischen 1:1,01 und 1:1,6, vorzugsweise zwischen 1:1,1 und 1:1,3.

Vorzugsweise verwendet man als Komponente Y) einen Polyether mit terminalen Epoxidgruppen und einem Epoxi-Equivalentgewicht zwischen 1000 und 3000 g/mol mit zusammenhängenden Polypropylenoxidblöcken von 5 bis 18 C₃H₈O-Wiederholungseinheiten und aromatischen Blöcken, welche mindestens eine Phenylen-Struktureinheit enthalten, ist.

Weiterhin ist es bevorzugt, dass Komponente Y) das Reaktionsprodukt von Polypropylenoxid-diglycidylether mit einem Epoxi-Equivalentgewicht zwischen 170 und 400 g/mol, Bisphenol A und einem Diglycidylether von Bisphenol-A oder Bisphenol-F mit einem Epoxi-Equivalentgewicht zwischen 156 und 550 g/mol und einem Epoxi-Equivalentgewicht des Reaktionsproduktes zwischen 1000 und 3000 g/mol ist.

Die erfindungsgemäße Harzkomponente kann eine oder mehrere der beschriebenen oligomeren oder polymeren Urethangruppen-freien Polyether-Verbindungen C2) in Mengen von 2 bis 60 Ges.-%, vorzugsweise von 5 bis 40 Gew.-% und überaus bevorzugt von 10 bis 30 Gew.-%, jeweils bezogen auf die Gesamtmenge der Harzkomponente, enthalten.

Eine weitere bevorzugte Ausführungsform ist dadurch gekennzeichnet, dass die Harzkomponente und auch die hiermit formulierten kompletten Klebstoffe, Matrixmaterialen für Composite oder Strukturschäume keine Benzoxazinverbindung enthalten. Gegenüber Formutierungen, die Bezoxazinverbindungen enthalten, haben die Benzoxazin-freien Produkte im ungehärteten Zustand eine geringere Viskosität und im gehärteten Zustand eine höhere Bruchdehnung. Die Härtung kann bei niedrigeren Temperaturen erfolgen.

In einer weiteren bevorzugten Ausführungsform enthält die Harzkomponenten zusätzlich Elastomerpartikel, die eine Kern-Schale-Struktur aufweisen. Beispiele hierfür sind Kautschuk-Partikel mit Kem-Schale-Struktur. Dabei ist es bevorzugt, dass die Kautschuk-Partikel mit Kern-Schale-Struktur einen Kern aus einem Polymermaterial mit einer Glasübergangstemperatur von unterhalb 0°C und eine Hülle aus einem Polymermaterial mit einer Glasübergangstemperatur von oberhalb 25°C aufweisen. Besonders geeignete Kautschuk-Partikel mit Kern-Schale-Struktur können einen Kern aus einem Dien-Homopolymer, einem Dien-Copolymer oder einem Polysiloxan-Elastomer und/oder eine Schale aus einem Alkyl(meth)acrylat-Homopolymer oder -Copolymer aufweisen.

Beispielsweise kann der Kern dieser Kern-Schale-Partikel ein Dienhomopolymer oder Copolymer enthalten, das ausgewählt sein kann aus einem Homopolymer von Butadien oder Isopren, einem Copolymer von Butadien oder Isopren mit einem oder mehreren ethylenisch ungesättigten Monomeren, wie beispielsweise vinylaromatische Monomere, (Meth)acrylnitril, (Meth)acrylaten oder ähnlichen Monomeren. Das Polymer oder Copolymer der Schale kann als Monomere beispielsweise enthalten: (Meth)acrylate, wie insbesondere Methylmethacrylat, vinylaromatische Monomere (beispielsweise Styrol), Vinylcyanide (beispielsweise Acrylnitril), ungesättigte Säuren oder Anhydride (beispielsweise Acrylsäure), (Meth)acrylamide und ähnliche Monomere, die zu Polymeren mit einer geeigneten hohen Glastemperatur führen. Als Kern können auch andere kautschukartige Polymere verwendet werden, wie beispielsweise Polybutylacrylat oder Polysiloxanelastomere, wie beispielsweise Polydimethylsiloxan, insbesondere vemetztes Polydimethylsiloxan.

Typischerweise sind diese Kern-Schate-Partikel so aufgebaut, dass der Kern 50 bis 95 Gew.-% des Kern-Schale-Partikels und die Schale 5 bis 50 Gew.-% dieses Partikels ausmachen.

Vorzugsweise sind diese Kautschukpartikel relativ klein. Beispielsweise kann die durchschnittliche Teilchengröße (wie beispielsweise durch Lichtstreumethoden bestimmbar) im Bereich von etwa 0,03 bis etwa 2 µm, insbesondere im Bereich von etwa 0,05 bis etwa 1 µm liegen. Kleinere Kem-Schale-Partikel können jedoch ebenfalls verwendet werden, beispielsweise solche, deren mittlerer Durchmesser kleiner als etwa 500 nm, insbesondere kleiner als etwa 200 nm ist. Beispielsweise kann die durchschnittliche Teilchengröße im Bereich von etwa 25 bis etwa 200 nm liegen.

Die Herstellung derartiger Kern-Schale-Partikel ist im Stand der Technik bekannt, wie beispielsweise in WO 2007/025007 auf Seite 6, Zeilen 16 bis 21 angegeben ist. Weiterhin können Kern-Schale Partikel eingesetzt werden, deren Herstellung in US 7485680 beschrieben ist.

Dieselbe Funktion wie die vorstehend genannten Kautschuk-Partikel mit Kern-Schale-Struktur können anorganische Partikel übernehmen, die eine Hülle aus organischen Polymeren aufweisen. Daher ist eine weitere bevorzugte Ausführungsform der vorliegenden Erfindung dadurch gekennzeichnet, dass die erfindungsgemäße Harzkomponente als zusätzliche Komponente anorganische Partikel enthält, die eine Hülle aus organischen Polymeren aufweisen, wobei die organischen Polymere vorzugsweise ausgewählt sind aus Homo- oder Copolymeren von Acrylsäure- und/oder Methacrylsäureester und zu mindestens 30 Gew.-% aus einpolymersiertem Acrylsäure- und/oder Methacrylsäureester bestehen.

Vorzugsweise beträgt der Anteil der Elastomerpartikel ohne andere Bestandteile des die Elastomerpartikel enthaltenden Rohstoffs an der Gesamtmenge der polymerisierbaren Zubereitung 0 bis 30 Gew.-%, besonders bevorzugt 0 bis 20 Gew.-% und überaus bevorzugt 5 bis 15 Gew.-%.

Zusätzlich zu oder anstelle von den vorstehend genannten Elastomerpartikeln kann die Harzkomponente mindestens einen weiteren Schlagzähigkeits-Modifizierer / Toughener enthalten. Hierfür können beispielsweise diejenigen Polymere verwendet werden, die in der einleitend zitierten Literatur für diesen Zweck genannt werden. Solche und weitere Beispiele sind:

Thermoplastisches Polyurethan, das reaktiv oder nicht reaktiv sein kann. In einer bevorzugten Ausführungsform ist das thermoplastische Polyurethan nicht reaktiv in dem Sinne, dass es nicht weiter vemetzbar ist. Insbesondere kann es sich hierbei um ein Polyurethan handeln, das eine Polyester-Kette enthält. Der Begriff "thermoplastisches Polyurethan", häufig abgekürzt als "TPU", ist dem Fachmann auf dem hier betroffenen Gebiet bekannt. Geeignete thermoplastische Polyurethane, sind im Handel erhältlich und können beispielsweise von der Fa. Merquinsa in Spanien oder der Fa. Danquinsa GmbH in Deutschland bezogen werden.

Anstelle von oder zusammen mit den reaktiven (vernetzbaren) oder nicht reaktiven (nicht vernetzbaren) thermoplastischen Polyurethanen kann die Harzkomponente Block-Copolymere mit thermoplastischen Polymerblöcken enthalten. Diese werden vorzugsweise ausgewählt aus solchen, die einen ersten Polymerblock mit einer Glasübergangstemperatur von unterhalb 15°C, insbesondere von unterhalb 0°C, und einen zweiten Polymerblock mit einer Glasübergangstemperatur von oberhalb 25°C, insbesondere von oberhalb 50°C enthalten. Weiterhin sind solche Block-Copolymere geeignet, die ausgewählt sind aus solchen, bei denen ein erster Polymerblock ausgewählt ist aus einem Polybutadien- oder Polyisoprenblock und ein zweiter Polymerblock ausgewählt ist aus einem Polystyrol- oder einem Polymethylmethacrylat-Block.

Beispielsweise wird das Block-Copolymer ausgewählt aus Copolymeren mit folgendem Blockaufbau: Styrol-Butadien-(Meth)Acrylat, Styro)-Butadien-(Meth)Acrylsäureester, Ethylen-(Meth)Acrylsäureester-Glycidyl(meth)acrylsäureester, Ethylen-(Meth)Acrylsäureester-Maleinsäureanhydrid, (Meth)Acrylsäureester- Butylacrylat-(Meth)Acrylsäureester, vorzugsweise Methylmethacrylat-Butylacrylat-Methylmethacrylat

Die vorstehend genannten Block-Copolymere entsprechen denjenigen, die auch im Rahmen der WO 2007/025007 eingesetzt werden können. Nähere Ausführungen hierzu und weitere auch im Rahmen der vorliegenden Erfindung geeignete Block-Copolymere können diesem Dokument von S. 25, Z. 21 bis S. 26, Z. 9 entnommen werden.

Der weitere Schlagzähigkeitsmodifizierer / Toughener kann auch ein Umsetzungsprodukt des Epoxidharzes C1) der erfindungsgemäßen Harzkomponente mit Polymeren sein, die Weichsegmenten darstellen oder enthalten. Eine bevorzugte Ausführungsform besteht daher darin, dass der weitere Schlagzähmodifizierer das Umsetzungsprodukt eines carboxylgruppenhaltigen Copolymeren auf der Basis von Butadien-Acryinitril mit einem stöchiometrischen Überschuss eines Epoxidharzes gemäß C1) ist. Eine weitere vorteilhafte Ausführungsform ist dass der weitere Schlagzähmodfizierer / Toughener das Umsetzungsprodukt eines aminogruppenhaltigen Polyethers mit einem stöchiometrischen Überschuss eines Epoxidharzes gemäß C1) ist. Für Einzelheiten hierzu wird auf das eingangs zitierte Dokument WO 2007/025007 verwiesen.

Vorzugsweise beträgt der Anteil des weiteren Schlagzähmodifizierers an der Gesamtmenge der polymerisierbaren Zubereitung 0 bis 30 Gew.-%, besonders bevorzugt 0 bis 20 Ges.-% und überaus bevorzugt 5 bis 15 Ges.-%.

Die erfindungsgemäße Harzkomponente kann als eine Komponente eines zweikomponentigen Klebstoffs dienen, dessen zweite Komponente einen Härter für Epoxidharze darstellt oder enthält. Daher betrifft die vorliegende Erfindung in einem weiteren Aspekt einen zweikomponentigen Klebstoff, dessen erste Komponente eine erfindungsgemäße Harzkomponente wie vorstehend beschrieben ist oder enthält und dessen zweite Komponente eine Härterkomponente darstellt, die mindestens eine aminogruppenhaltige Verbindung oder mindestens eine thiolgruppenhaltige Verbindung ist oder enthält. Hierfür können allgemein diejenigen Amin- oder Thiol-Härter eingesetzt werden, die dem Fachmann als Härterkomponente für zweikomponentige Epoxid-Klebstoffe Bekannt sind. Beispielsweise sind hierfür die als "Jeffamine^{™} D" oder "Jeffamine^{™} T" bekannten di- oder trifunktionalen aminoterminierten Polyalkylenglykole, insbesondere auf Basis von Etylenoxid und/oder Propylenoxid. Weitere Beispiele sind Polyaminoamide (bevorzugt: verschiede Typen Versamid™, Aradur™ oder Ancamide™), Polyamine (bevorzugt: Diethylentriamin, Triethylentetramin, Tetraethylenpentaamin, Pentaethylenhexamin, Aradur™, Ancamin™, Lauromin™), cycloaliphatische Polyamine (bevorzugt: Ancamine™, Lauromine™), Polyaminoimidazolin (bevorzugt: Versamid™), Aralkylamine (bevorzugt: MXDA), aromatische Amine (bevorzugt 4,4'-Diaminodiphenylsulfone, MDA), Polymercaptane (bevorzugt: Capcure™ 3-800), Carbobsäureanhydride (bevorzugt: Polysebacinsäurepolyanhydrid, Polyazelainsäurepolyanhydrid, Bernsteinsäureanhydrid, Citraconsäureanhydrid, Itaconsäureanhydrid, alkenylsubstituierte Bemsteinsäureanhydride, Dodecenylbernsteinsäureanhydrid, Maleinsäureanhydrid, Tricarballylsäureanhydrid, Nadicanhydrid, Methylnadicanhydrid, Linolsäureaddukt an Maleinsäureanhydrid, alkylierte Endoalkylentetrahydrophthalsäureanhydride, Methyltetrahydrophthalsäureanhydrid, Tetrahydrophthalsäureanhydrid, Hexahydrophthalsäureanhydrid, Pyromellitsäure-dianhydrid, Trimellitsäureanhydrid, Phthalsäureanhydrid, Tatrachlorphthalsäureanhydrid, Tetrabromphthalsäureanhydrid, Dichlormaleinsäureanhydrid, Chlomadicanhydrid, und Chlorendicanhydrid und maleinsäureanhydridgepfropftes Polybutadien; besonders bevorzugt: Methylnadicanhydrid, Methyltetrahydrophthalsäureanhydrid und Tetrahydrophthalsäureanhydrid)

Das erfindungsgemäße Harzsystem kann aber auch mit einem latenten Härter für Epoxide versetzt werden, so dass eine thermisch härtbare, einkomponentige Zusammensetzung entsteht. Daher betrifft die vorliegende Erfindung in einem weiteren Aspekt eine thermisch härtbare Zusammensetzung, enthaltend eine erfindungsgemäße Harzkomponente wie vorstehend beschrieben und C3) mindestens einen latenten Härter für Komponente C1).

Derartige latente Härter für Epoxidharze sind dem Fachmann ebenfalls bekannt. Diese können beispielsweise ausgewählt werden aus den folgenden Verbindungen: Guanidine, substituierte Guanidine, substituierte Harnstoffe, Melaminharze, Guanamin-Derivate, cyclische tertiäre Amine, aromatische Amine und/oder deren Mischungen. Dabei können die Härter sowohl stöchiometrisch mit in die Härtungsreaktion einbezogen sein, sie können jedoch auch katalytisch wirksam sein. Beispiele für substituierte Guanidine sind Methylguanidin, Dimethylguanidin, Trimethylguanidin, Tetramethylguanidin, Methylisobiguanidin, Dimethylisobiguanidin, Tetramethylisobiguanidin, Hexamethylisobiguanidin, Hepamethylisobiguanidin und ganz besonders Cyanoguanidin (Dicyandiamid). Als Vertreter für geeignete Guanamin-Derivate seien alkylierte Benzoguanamin-Harze, Benzoguanamin-Harze oder Methoximethyl-ethoxymethylbenzo-guanamin genannt. Bevorzugt ist Dicyandiamid geeignet.

Zusätzlich zu oder anstelle von den vorgenannten Härtern können katalytisch wirksame substituierte Harnstoffe eingesetzt werden. Dies sind insbesondere der p-Chlorphenyl-N,N-dimethylhamstoff (Monuron), 3-Phenyl-1,1-dimethylharnstoff (Fenuron) oder 3,4-Dichlorphenyl-N,N-dimethylhamstoff (Diuron). Prinzipiell können auch katalytisch wirksame tertiäre Acryl- oder Alkyl-Amine, wie beispielsweise das Benzyldimethylamin, Tris(dimethylamino)phenol, Piperidin oder Piperidinderivate eingesetzt werden. Weiterhin können diverse, vorzugsweise feste Imidazolderivate als katalytisch wirksame Beschleuniger eingesetzt werden. Stellvertretend genannt seien 2-Ethyl-2-methylimidazol, N-Butylimidazol, Benzimidazol sowie N-C₁ bis C₁₂-Alkylimidazole oder N-Arylimidazole. Weiterhin eigenen sich Addukte von Aminoverbindungen an Epoxidharze als beschleunigende Zusätze zu den vorgenannten Härtem. Geeignete Aminoverbindungen sind tertiäre aliphatische, aromatische oder cyclische Amine. Geeignete Epoxyverbindungen sind beispielsweise Polyepoxide auf Basis von Glycidylethern des Bisphenols A oder F oder des Resorcins. Konkrete Beispiele für solche Addukte sind Addukte von tertiären Aminen wie 2-Dimethylaminoethanol, N-substituierte Piperazine, N-substituierte Homopiperazine, N-substituierte Aminophenole an Di- oder Polyglycidylether des Bisphenols A oder F oder des Resorcins.

Bevorzugt enthält diese thermisch härtbare Zusammensetzung, bezogen auf die gesamte Zusammensetzung, 88 bis 99 Gew.-%, insbesondere 93 bis 97 Gew.-% des erfindungsgemäßen Harzsystems und 1 bis 12 Gew.-%, insbesondere 3 bis 7 Gew.-% der oben genannten latenten Härter.

Als latente Härter für Epoxidharze können auch Carbonsäuren oder ein Carbonsäureanhydride eingesetzt werden. Beispiele für geeignete Carbonsäurehärter sind: aliphatische Dicarbonsäuren wie Oxalsäure, Malonsäure, Bernsteinsäure, Glutarsäure, Adipinsäure, Pimelinsäure, Korksäure, Azelainsäure, Sebacinsäure, 3,6,9-Trioxaundecandisäure, oder dimerisierte oder trimerisierte Linolsäure; cycloaliphatische Polycarbonsäuren wie beispielsweise Tetrahydrophthalsäure, 4-Methyltetrahydrophthalsäure, Hexahydrophthalsäure und 4-Methylhexahydrophthalsäure; aromatische Dicarbonsäuren wie Phthalsäure, Isophthalsäure, Terephthalsäure oder Naphthalsäure; oder Diester-Dicarbonsäuren, die beispielsweise durch Umsetzung von Glykolen, z.B. Polypropylenglykol mit zwei Äquivalenten Dicarbonsäureanhydrid, wie beispielsweise Tetrahydrophthalsäureanhydrid, erhältlich sind.

Als Anhydridhärter können prinzipiell alle Anhydride von di- und höherflinktionellen Carbonsäuren, wie lineare aliphatische polymere Anhydride und cyclische Carbonsäureanhydride in Frage kommen. Beispiele für geeignete Anhydridhärter sind: Polysebacinsäurepolyanhydrid, Polyazelainsäurepolyanhydrid, Bernsteinsäureanhydrid, Citraconsäureanhydrid, Itaconsäureanhydrid, alkenylsubstituierte Bernsteinsäureanhydride, Dodecenylbernsteinsäureanhydrid, Maleinsäureanhydrid, Tricarballylsäureanhydrid, Nadicanhydrid, Methylnadicanhydrid, Linolsäureaddukt an Maleinsäureanhydrid, alkylierte Endoalkylentetrahydrophthalsäureanhydride, Methyltetrahydrophthalsäureanhydrid, Tetrahydrophthalsäureanhydrid, Hexahydrophthalsäureanhydrid, Pyromellitsäuredianhydrid, Trimellitsäureanhydrid, Phthalsäureanhydrid, Tatrachlorphthalsäureanhydrid, Tetrabromphthalsäureanhydrid, Dichlormaleinsäureanhydrid, Chlomadicanhydrid und Chlorendicanhydrid.

Vorzugsweise werden bei 22 °C flüssige oder leicht (das heißt unterhalb von 60 °C) schmelzende Dicarbonsäureanhydride als Epoxidharzhärter eingesetzt. Besonders bevorzugte Anhydridhärter sind Methylnadicanhydrid, Tetrahydrophthalsäureanhydrid und Methyltetrahydrophthalsäureanhydrid, wobei Methylnadicanhydrid und Methyltetrahydrophthalsäureanhydrid vorzugsweise als Isomerengemisch eingesetzt werden.

Bevorzugt enthält diese thermisch härtbare Zusammensetzung, bezogen auf die gesamte Zusammensetzung, 35 bis 96 Gew.-%, insbesondere 45 bis 75 Gew.-% des erfindungsgemäßen Harzsystems und 4 bis 65 Gew.-%, insbesondere 25 bis 55 Gew.-% Carbonsäure beziehungsweise Carbonsäureanhydrid als latenten Härter.

Sowohl der zweikomponentige Klebstoff als auch die thermisch härtbare Zusammensetzung können als Strukturklebstoff oder als Matrix für ein Composit verwendet werden, worin eine weitere Ausführungsform der vorliegenden Erfindung besteht. Besonders kann der Strukturklebstoff zum Fügen von Teilen im Schiffsbau, Flugzeugbau und insbesondere im Fahrzeugbau Verwendung finden. Er zeichnet sich durch hohe Festigkeit einerseits und durch hohe Zähigkeit und Bruchdehnung andererseits aus, also allgemein durch ein erwünschtes günstiges Bruchverhalten.

Fügt man der vorstehend beschriebenen thermisch härtbaren Zusammensetzung zusätzlich ein Treibmittel (auch "Blähmittel" genannt, englisch: "foaming agent") zu, wird eine expandierbare und härtbare Zubereitung erhalten, die als Strukturschaum zur Verstärkung von Bauteilen, insbesondere von Hohlbauteilen dienen kann. Sie kann zur Verstärkung von Bauteilen im Fahrzeugbau, insbesondere beim Automobilbau Verwendung finden. Daher besteht eine weitere Ausführungsform der vorliegenden Erfindung darin, dass sie zusätzlich
C4) ein physikalisches oder chemisches Treibmittel enthält.

Als Treibmittel eignen sich im Prinzip alle bekannten Treibmittel wie z. B. die "chemischen Treibmittel" die durch Zersetzung Gase freisetzen, oder "physikalische Treibmittel", d.h. expandierende Hohlkugeln. Beispiele für die erstgenannten Treibmittel sind Azobisisobutyronitril, Azodicarbonamid, Di-Nitroso-pentamethylentetramin, 4,4'-Oxybis(benzolsulfonsäurehydrazid), Diphenylsulfon-3,3'-disulfohydrazid, Benzol-1,3-disulfohydrazid, p-Toluolsulfonylsemicarbazid. Besonders bevorzugt werden die expandierbaren Kunststoffmikrohohlkugeln auf der Basis von Polyvinylidenchloridcopolymeren oder Acrylnitril/(Meth)acrylat-Copolymeren. Diese sind z.B. unter dem Namen "Dualite®" beziehungsweise "Expancel®" von den Firmen Pierce & Stevens beziehungsweise Casco Nobel im Handel erhältlich.

Die Menge an Treibmittel wählt man vorzugsweise so, dass sich das Volumen der Masse beim Erwärmen auf Aktivierungstemperatur (oder Expansionstemperatur) um mindestens 10 %, vorzugsweise mindestens 20 % und insbesondere mindestens 50 % irreversibel vergrößert. Hierunter ist zu verstehen, dass die Masse zusätzlich zur normalen, reversiblen thermischen Ausdehnung gemäß ihrem thermischen Ausdehnungskoeffizienten ihr Volumen im Vergleich zum Ausgangsvolumen bei Raumtemperatur (22°C) beim Erwärmen auf die Aktivierungstemperatur irreversibel derart vergrößert, dass es nach dem Wiederabkühlen auf Raumtemperatur im genannten Ausmaß größer ist als zuvor. Der angegebene Expansionsgrad bezieht sich also auf das Volumen der Masse bei Raumtemperatur vor und nach dem vorübergehenden Erhitzen auf die Aktivierungstemperatur. Die Obergrenze des Expansionsgrads kann man durch die Wahl der Menge des Treibmittels so einstellen, dass sie Werte von bis zu 1000 % oder sogar bis zu 2000 % erreicht. Für viele Anwendungen genügt es jedoch, so viel Treibmittel zuzusetzen, dass die Obergrenze des Expansionsgrades unter 300 %, insbesondere unter 200 % liegt.

In dieser Ausführungsform enthält die thermisch schäumbare und härtbare Zusammensetzung vorzugsweise, bezogen auf die gesamte Zusammensetzung:
76 bis 98,9 Gew.-%, insbesondere 89 bis 96 Gew.-% des erfindungsgemäßen Harzsystems,
1 bis 12 Gew.-%, insbesondere 3 bis 7 Gew.-% latenten Härter und
0,1 bis 12 Gew.-%, insbesondere 1 bis 4 Gew.-% Treibmittel.

Die Aktivierungstemperatur liegt vorzugsweise im Bereich von 120 bis 220 °C, insbesondere bei 100 bis 200 °C, unabhängig davon ob die thermisch härtbare Zusammensetzung ein Treibmittel enthält oder nicht. Diese Temperatur soll vorzugsweise für eine Zeitdauer im Bereich von 5 bis 150 Minuten aufrecht gehalten werden.

Diese thermisch härtbare und schäumbare Zusammensetzung kann als Strukurschaum verwendet werden, worin eine weitere Ausführungsform der vorliegenden Erfindung besteht. Dieser kann zum Verstärken und/oder Abdichten von Hohlräumen, insbesondere von Hohlräumen in metallischen Strukturen verwendet werden. Für diesen Zweck kann er beispielsweise im Schiffsbau, Flugzeugbau und insbesondere im Fahrzeugbau Verwendung finden. Er zeichnet sich auch in dieser Anwendung durch hohe Festigkeit einerseits und durch hohe Zähigkeit und Bruchdehnung andererseits aus, also allgemein durch ein erwünschtes günstiges Bruchverhalten.

In der Regel enthalten die erfindungsgemäßen Zusammensetzungen neben den oben beschriebenen oligomeren oder polymeren Urethangruppen-freien Polyether-Verbindungen weiterhin Additive, wie zum Beispiel gemahlene oder gefällte Kreiden, Ruß, Calcium-Magnesiumcarbonate, Schwerspat, sowie insbesondere silicatische Füllstoffe vom Typ des Aluminium-Magnesium-Calcium-Silicats, z. B. Wollastonit oder Chlorit.

Weiterhin können die erfindungsgemäßen Zusammensetzungen andere Addtitive wie z. B. Weichmacher, Reaktivverdünner, weitere Schlagzähmodifizierungsmittel, Rheologiehilfsmittel, Netzmittel, Alterungsschutzmittel, Stabilisatoren und/oder Farbpigmente enthalten. Vorzugsweise sind die Zusammensetzungen jedoch frei von Weichmachern.

Um als ein- oder zweikomponentiger Strukturklebstoff, als Matrixmaterial für Composits oder als Strukturschaum eingesetzt werden zu können, ist es bevorzugt, dass die härtungsbereite Zusammensetzung (d.h. die Zusammensetzung unmittelbar vor Eintritt der Härtungsreaktion) möglichst wenig organisches Lösungsmittel enthält. Hierunter werden hier Substanzen verstanden, die bei 22 °C flüssig sind, einen Siedepunkt bei Normaldruck von unterhalb 300 °C aufweisen und die nicht bei der Härtungsreaktion in das entstehende Polymemetzwerk chemisch eingebunden werden. Daher soll die härtungsbereite Zusammensetzung, bezogen auf die gesamte Zusammensetzung, nicht mehr als 20 Gew.-%, vorzugsweise nicht mehr als 10 Gew.-%, insbesondere nicht mehr als 5 Gew.-% und speziell bevorzugt nicht mehr als 1 Gew.-% organisches Lösungsmittel enthalten.

Ein weiterer Gegenstand der vorliegenden Erfindung ist generell das Polymerisationsprodukt der erfindungsgemäßen Harzkomponenten. Es weist einen hohen Elastizitätsmodul und einen hohen Biegemodul auf sowie hohe Zugfestigkeit und Schlagzähigkeit auf. So umfasst die vorliegende Erfindung auch einen Gegenstand, der mindestens zwei Baukomponenten enthält, die mit einem vorstehend beschriebenen zweikomponentigen Klebstoff oder mit einer vorstehend beschriebenen thermisch härtbaren Zusammensetzung nach verklebt wurden. Weiterhin umfasst die vorliegende Erfindung einen Gegenstand, der eine aufgeschäumte und ausgehärtete Zusammensetzung vie vorstehend beschrieben enthält.

### Ausführunosbeispiele

Im Rahmen der vorliegenden Erfindung kann das gewichtsmittlere Molekulargewicht (M_{w}) mittels Gelpermeationschromatographie (GPC) mit Polystyrol als Standard bestimmt werden. Die Glasübergangstemperatur (T_{g}) kann im Rahmend der vorliegenden Erfindung durch Dynamisch-Mechanische Thermo-Analyse (DMTA) bestimmt werden, wobei die jeweilige Glasübergangstemperatur aus dem Maximalwert des Verlustmoduls vs. Temperatur Diagramm erhalten wird.

Die Biegefestigkeit (flexural strength) und das Biegemodul (flexural modulus) wurden gemäß ASTM D790 bestimmt, wobei jeweils ein Probenkörper der Größe 90 mm x 12.7 mm x 3.2 mm, span = 50.8 mm und eine Geschwindigkeit = 1.27 mm/min benutzt wurde.

Der kritische Spannungsintensitätsfaktor K1C und der G1C Wert (Bruchenergie) wurden gemäß ASTM D5045-96 unter Verwendung des so genannten "single etch notch bending (SENB)" bestimmt, wobei jeweils ein Probenkörper der Größe 56 mm x 12.7 mm x 3.2 mm verwendet wurde.

E-Modul, Bruchdehnung und Zugfestigkeit wurden gemäß ASTM D683 mit einer Zugprüfmaschine 10TH2A, Traversenwegaufnehmer WN:139315, Videoextensometer und Kraftsensor ID:0 WN:139316 10 kN bestimmt, wobei jeweils Prüfkörper Typ I (ASTM D683) verwendet wurden.

Die Zugscherfestigkeit wurde mit einer Zwick Zugprüfmaschine gemäß DIN EN1465 bei Raumtempertur mit einer Zuggeschwindigkeit von 10 mm/min ermittelt.

### Eingesetzte Rohstoffe:

DER 732 - von DOW Chemical Company: Polyoxypropylendiglycidylether
DER 736 - von DOW Chemical Company: Polyoxypropylendiglycidylether
DER 331 - von DOW Chemical Company: Bisphenol-A Epoxidharz
Bisphenol A
Tetrabutylammoniumbromid ("TBAB")
Cardolite 2513 HP - von Cardolite Corp.: Cashewöl-Epichlorhydrin-Polymer
DYCY: Dyhard 100 SH - von Evonik: Dicyandiamid
Fenuron: Dyhard UR 300-von Evonik: 1,1-Dimethyl-3-phenylhamstoff
Kane Ace MX-153 - von Kaneka: Butadien-Acryl-Kern-Schate Polymer in Epoxidharz
Jeffamine D-2000 - von Huntsman: Polyoxypropylendiamin, Molmasse = 2000
Adeka QR 9466 - von Adeka: Thermoplastisches Polyurethan
Cabosil TS 720 - von Cabot: Pyrogene Kieseldäure
Capcure LOF - von Cognis: Polymercaptan-Epoxyhärter
Versamine EH-30 - von Cognis: Tris(dimethylaminomethyl)phenol
Das Epoxid-Equivalentgewicht wird mit EEW abgekürzt.

Allgemeine Herstellvorschrift für die Komponenten C2, im Weiteren als TEPO bezeichnet:
Ein Reaktionsgefäß mit Rührer wird mit den entsprechenden Mengen Epoxid-Präpolymer DER 732, DER 736, DER 331, Bisphenol A und dem Katalysator Tetrabutylammoniumbromid beschickt. Das Reaktionsgefäß wird auf 150°C unter Rühren aufgeheizt. Die Reaktionszeit beträgt 3-5 Stunden.

Allgemeine Herstellvorschrift für Klebstoffe:
Man vermischt alle Flüssigkomponenten für 60 Minuten bei 90 °C unter Vakuum, gibt DICY und Fenuron zu und setzt das Vermischen für weitere 30 Minuten fort.

Allgemeine Herstellvorschrift für die Prüfkörper der Vergleichsbeispiele 1-7 und der Klebstoffe 1 bis 21:
Die warme Formulierung wird blasenfrei in einen Teflonrahmen von 15 cm x 20 cm Größe und 3 mm Stärke auf eine mit einem Trennmittel behandelte Aluminiumplatte gegeben, mit einer zweiten mit einem Trennmittel behandelten Aluminiumplatte abgedeckt, zwischen zwei Stahlplatten mechanisch fixiert und für 60 min bei 180°C gehärtet. Die Prüfkörper werden aus der gehärteten Epoxidplatte nach dem Entfernen der Metallplatten und des Teflonrahmens ausgesägt.

### Vergleichsbeispiel 1:

175,0 g DER 331, 7,4 g Cardolite 2513 HP, 20,5 g DICY, 1,0 g Fenuron.
Biegemodul: 2424 +/- 95 MPa; K1C: 1,01 +/- 0,05 MPa

### TEPO 1:

75,0 g DER 732, 46,8 g DER 331, 28,5 g Bisphenol-A, 0,75 g TBAB; EEW: 611.

### Klebstoff 1:

125,0 g DER 331, 7,4 g Cardolite 2513 HP, 16,6 g DICY, 1,0 g Fenuron, 50,0 g TEPO 1.
Biegemodul: 2837 +/- 469 MPa, K1C: 1,30 +/- 0,02 MPa.

### TEPO 2:

72,0 g DER 732, 44,9 g DER 331, 36,5 g Bisphenol-A, 0,46 g TBAB. EEW: 1000.

### Klebstoff 2:

125,0 g DER 331, 7,4 g Cardolite 2513 HP, 16,6 g DICY, 1,0 g Fenuron, 50,0 g TEPO 2.
Biegemodul: 2541 +/- 365 MPa, K1C: 1,69 +/- 0,16 MPa

### TEPO 3:

69,0 g DER 732, 43,0 g DER 331, 39,3 g Bisphenol-A, 0,45 g TBAB. EEW: 1497.

### Klebstoff 3:

125,0 g DER 331, 7,4 g Cardolite 2513 HP, 6,6 g DICY, 1,0 g Fenuron, 50,0 g TEPO 3.
Biegemodul: 2162 +/- 465 MPa, K1C: 2,72 +/- 0,16 MPa

### TEPO 4:

66,0 g DER 732, 41,1 g DER 331, 40,1 g Bisphenol-A, 0,44 g TBAB. EEW: 1902.

### Klebstoff 4:

125,0 g DER 331, 7,4 g Cardolite 2513 HP, 16,6 g DICY, 1,0 g Fenuron, 50,0 g TEPO 4.
Biegemodul: 2737 +/- 319 MPa, K1C: 2,99 +/- 0,09 MPa

### TEPO 5:

66,0 g DER 732, 41,1 g DER 331, 41,7 g Bisphenol-A, 0,45 g TBAB. EEW: 2240.

### Klebstoff 5:

125,0 g DER 331, 7,4 g Cardolite 2513 HP, 16,6 g DICY, 1,0 g Fenuron, 5,0 g TEPO 5.
Biegemodul: 2652 +/- 332 MPa, K1C: 2,82 +/- 0,11 MPa

### TEPO 6:

63,0 g DER 732, 39,3 g DER 331, 2,6 g Bisphenol-A, 0,43 g TBAB. EEW: 2952.

### Klebstoff 6:

125,0 g DER 331, 7,4 g Cardolite 2513 HP, 16,6 g DICY, 1,0 g Fenuron, 50,0 g TEPO 6.
Biegemodul: 2260 +/- 386 MPa, K1C: 3,11 +/- 0,06 MPa

### TEPO 7:

114,0 g DER 732, 33,3 g Bisphenol-A, 0,44 g TBAB. EEW: 1613.

### Klebstoff 7:

125,0 g DER 331, 7,4 g Cardolite 2513 HP, 15,4 g DICY, 1,0 g Fenuron, 50,0 g TEPO 7.
Biegemodul: 1790 +/- 23 MPa, K1C: 1,76 +/- 0,09 MPa

### TEPO 8:

114,0 g DER 732, 36,1 g Bisphenol-A, 0,45 g TBAB. EEW: 2277.

### Klebstoff 8:

125,0 g DER 331, 7,4 g Cardolite 2513 HP, 15,4 g DICY, 1,0 g Fenuron, 50,0 g TEPO 8.
Biegemodul: 1714 +/- 28 MPa, K1C: 1,47 +/- 0,09 MPa

### TEPO 9:

108,8 g DER 732, 21,3 g DER 331, 36,8 g Bisphenol-A, 0,5 g TBAB. EEW: 1236.

### Klebstoff 9:

125,0 g DER 331, 7,4 g Cardolite 2513 HP, 15,8 g DICY, 1,0 g Fenuron, 50,0 g TEPO 9.
Biegemodul: 2629 +/- 96 MPa, K1C: 2,51 +/- 0,15 MPa

### TEPO 10:

102,4 g DER 732,19,8 g DER 331, 37,2 g Bisphenol-A, 0,48 g TBAB. EEW: 1416.

### Klebstoff 10:

125,0 g DER 331, 7,4 g Cardolite 2513 HP, 15,6 g DICY, 1,0 g Fenuron, 50,0 g TEPO 10.
Biegemodul: 2375 +/- 38 MPa, K1C: 2,57 +/- 0,16 MPa

### TEPO 11:

96,0 g DER 732, 18,7 g DER 331, 37,8 g Bisphenol-A, 0,46 g TBAB. EEW: 1749.

### Klebstoff 11:

125,0 g DER 331, 7,4 g Cardolite 2513 HP, 15,5 g DICY, 1,0 g Fenuron, 50,0 g TEPO 11.
Biegemodul: 1889 +/- 56 MPa, K1C: 2,05 +/- 0,21 MPa

### TEPO 12:

96,0 g DER 732, 28,0 g DER 331, 37,0 g Bisphenol-A, 0,46 g TBAB. EEW: 1201.

### Klebstoff 12:

125,0 g DER 331, 7,4 g Cardolite 2513 HP, 15,8 g DICY, 1,0 g Fenuron, 50,0 g TEPO 12.
Biegemodul: 2340 +/- 75 MPa, K1C: 2,47 +/- 0,17 MPa

### TEPO 13:

89,6 g DER 732, 26,2 g DER 331, 37,2 g Bisphenol-A, 0,46 g TBAB. EEW: 1564.

### Klebstoff 13:

125,0 g DER 331, 7,4 g Cardolite 2513 HP, 15,6 g DICY, 1,0 g Fenuron, 50,0 g TEPO 13.
Biegemodul: 2560 +/- 60 MPa, K1C: 2,42 +/- 0,24 MPa

### TEPO 14:

89,6 g DER 732, 26,2 g DER 331, 40,3 g Bisphenol-A, 0,47 g TBAB. EEW: 1818.

### Klebstoff 14:

125,0 g DER 331, 7,4 g Cardolite 2513 HP, 15,5 g DICY, 1,0 g Fenuron, 50,0 g TEPO 14.
Biegemodul: 2328 +/- 62 MPa, K1C: 2,25 +/- 0,18 MPa

### TEPO 15:

48,0 g DER 732, 56,1 g DER 331, 41,0 g Bisphenol-A, 0,44 g TBAB. EEW: 1774.

### Klebstoff 15:

125,0 g DER 331, 7,4 g Cardolite 2513 HP, 15,5 g DICY, 1,0 g Fenuron, 50,0 g TEPO 15.
Biegemodul: 3312 +/- 163 MPa, K1C: 2,73 +/- 0,57 MPa

### Klebstoff 16:

48,0 g DER 331, 52,0 g Kane Ace MX-153, 5,9 g Cardolite 2513 HP, 10,6 g DICY, 0,8 g Fenuron, 40,0 g TEPO 4.
Biegemodul: 2586 +/-109 MPa, K1C: 2,69 +/- 0,18 MPa

### Klebstoff 17:

65,0 g DER 331, 60,0 g Kane Ace MX-153, 7,4 g Cardolite 2513 HP, 13,4 g DICY, 1,0 g Fenuron, 50,0 g TEPO 15.
Biegemodul: 2839 +/-104 MPa, K1C: 2,84 +/- 0,21 MPa

### Klebstoff 18:

55,0 g DER 331, 40.0 g Kane Ace MX-153, 7,4 g Cardolite 2513 HP, 11,0 g DICY, 1,0 g Fenuron, 80,0 g TEPO 4.
Biegemodul: 2580 +/-111 MPa, K1C: 2,88 +/- 0,13 MPa

### Klebstoff 19:

125,0 g DER 331, 7,4 g Cardolite 2513 HP, 16,6 g DICY, 1,0 g Fenuron, 50,0 g TEPO 4.
Biegemodul: 2737 +/- 319 MPa, K1C: 2,99 +/- 0,09 MPa

### Vergleichsbeispiel 2: Prepo 2000

Das Polyetherdiamin und das Epoxidharz werden in einen Planschliffkolben eingewogen und für 3 h bei 120°C gerührt.
40,0 g Jeffamine 2000, 60,0 g DER 331.

### Vergleichsbeispiel 3

59,5 g DER 331, 3,5 g Cardolite 2513 HP, 8,0 g DICY, 0,5 g Fenuron, 3,5 g Cabosil TS 720, 25,0 g Prepo 2000 (entspricht einem Anteil von Weichsegmenten von 10,0 g)

Biegemodul: 2410 +/- 55 MPa, K1C: 2,07 +/- 0,05 MPa, Tg: 113 +/- 0,7 °C, E-Modul : 2322 +/- 47 N/mm², Bruchdehnung: 7,6 +/-1,5 %, Zugfestigkeit: 53,8 +/- 0,8 MPa.

### Vergleichsbeispiel 4:

54,0 g DER 331, 3,5 g Cardolite 2513 HP, 8,5 g DICY, 0,5 g Fenuron, 3,5 g Cabosil TS 720, 30,0 g Kane Ace MX-153 (entspricht einem Anteil von Weichsegmenten von 10,0 g)

Biegemodul: 2938 +/- 36 MPa, K1C: 2,71 +/- 0,05 MPa, Tg: 120 +/- 0,3 °C, E-Modul : 3069 +/- 76 N/mm², Bruchdehnung: 3,2 +/-1,2 %, Zugfestigkeit: 59,0 +/- 9,3 MPa

### Vergleichsbeispiel 5:

74,1 g DER 331, 3,5 g Cardolite 2513 HP, 8,4 g DICY, 0,5 g Fenuron, 3,5 g Cabosil TS 720, 10,0 g Adeka QR-9466 (entspricht einem Anteil von Weichsegmenten von 10,0 g)
Biegemodul: 2910 +/- 116 MPa, K1C: 2,43 +/- 0,04 MPa, Tg : 117 +/- 0,0 °C, E-Modul : 2953 +/- 74 N/mm², Bruchdehnung: 4,2 +/-1,5 %, Zugfestigkeit: 62,1 +/-4,9 MPa

### Klebstoff 20:

63,2 g DER 331, 3,5 g Cardolite 2513 HP, 7,3 g DICY, 0,5 g Fenuron, 3,5 g Cabosil TS 720, 22,0 g TEPO 4 (entspricht einem Anteil von Weichsegmenten von 10,0 g)
Biegemodul: 3287 +/- 54 MPa, K1C: 2,68 +/- 0,25 MPa, Tg: 109 +/- 1.4 °C, E-Modul : 3263 +/ 98 N/mm², Bruchdehnung: 13,0 +/-1,4 %, Zugfestigkeit: 64,3 +/- 0,6 MPa

### Vergleichsbeispiel 6:

45,2 g DER 331, 3,5 g Cardolite 2513 HP, 7,5 g DICY, 0,5 g Fenuron, 3,5 g Cabosil TS 720, 10,0 g Adeka QR-9466*, 30,0 g Kane Ace Mix-153*
* Entspricht einem gesamten Weichsegmentanteil von 20,0 g
Biegemodul: 2255 +/- 38 MPa, K1C: 2,25 +/- 0,08 MPa, Tg: 114 +/- 0,7 °C, E-Modul : 2218 +/- 42 N/mm², Bruchdehnung: 10,4 +/- 0,8 %, Zugfestigkeit: 49,1 +/- 0,5 MPa

### Vergleichsbeispiel 7:

30,5 g DER 331, 3,5 g Cardolite 2513 HP, 7,0 g DICY, 0,5 g Fenuron, 3,5 g Cabosil TS 720, 25,0 g Prepo 2000*, 30,0 g Kane Ace MX-153*
* Entspricht einem gesamten Weichsegmentanteil von 20,0 g
Biegemodul: 1919 +/ 33 MPa, K1C: 1,77 +/- 0,08 MPa, Tg: 117 +/- 0,4 °C, E-Modul : 1805 +/- 44 N/mm².

### Klebstoff 21:

34,1 g DER 331, 3,5 g Cardolite 2513 HP, 6,4 g DICY, 0,5 g Fenuron, 3,5 g Cabosil TS 720, 30,0 g Kane Ace MX-153*, 22,0 g TEPO 4*
* Entspricht einem gesamten Weichsegmentanteil von 20,0 g
Biegemodul: 2855 +/- 21 MPa, K1C: 2,95 +/- 0,18 MPa, Tg: 108 +/- 0,2 °C, E-Modul : 2451 +/- 216 N/mm², Bruchdehnung: 13,4 +/- 2,9 %, Zugfestigkeit: 51,2 +/- 0,8 MPa

### Vergleichsbeispiel 8:

### Komponente A:

42,40g DER 354, 4,99g Cardolite Lite 2513HP, 3.00g Cabosil TS-720

### Komponente B:

44,16g Capcure LOF, 5,46g Versamine EH-30
Härtungsbedingungen: 60 Minuten bei 100°C und im Anschluss drei Tage bei Raumtemperatur Zugscherfestigkeit (DC05 CRS 1,5mm): 10,84 +/-1,47 MPa
Zugscherfestigkeit (Alu 6016 1,25mm): 10,32 +/-1,96 MPa

### Klebstoff 21:

### Komponente A:

37,19g DER 354, 5,00g Cardolite Lite 2513HP, 10,0g TEPO 4, 3,02g Cabosil TS-720 Komponente B:
42,01g Capcure LOF, 5,19g Versamine EH-30
Härtungsbedingungen: 60 Minuten bei 100°C und im Anschluss drei Tage bei Raumtemperatur Zugscherfestigkeit (DC05 CRS 1,5mm): 14,53 +1-0,98 MPa
Zugscherfestigkeit (Alu 6016 1,25mm): 14,94 +1-0,23 MPa

### Klebstoff 22:

### Komponente A:

29,38g DER 354, 5,00g Cardolite Lite 2513HP, 25,0g TEPO 4, 3,00g Cabosil TS-720 Komponente B:
37,74g Capcure LOF, 4,66g Versamine EH-30
Härtungsbedingungen: 60 Minuten bei 100°C und im Anschluss drei Tage bei Raumtemperatur Zugscherfestigkeit (DC05 CRS 1,5mm): 18,93 +/-0,27 MPa
Zugscherfestigkeit (Alu 6016 1,25mm): 16,51 +/-0,40 MPa

## Patentansprüche

1. Harzkomponente für einen ein- oder zwei-komponentigen Klebstoff oder einen Strukturschaum enthaltend
C1) mindestens ein Epoxidharz mit durchschnittlich mehr als einer Epoxidgruppe pro Molekül, das nicht der Definition der Komponenten C2) entspricht,
C2) mindestens eine oligomere oder polymere Urethangruppen-freie Polyether-Verbindung, umfassend ein oder mehrere Strukturelemente der allgemeinen Formel (I), 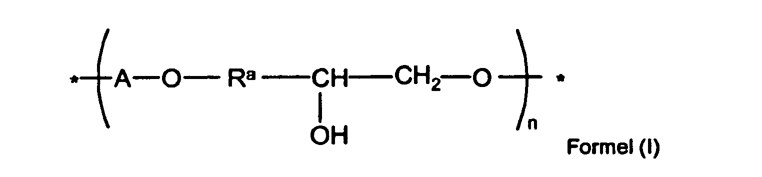 wobei n eine Zahl von 5 bis 10000 ist, jeder Rest R^{a} in jeder Wiederholungseinheit unabhängig voneinander für eine divalente Verbindungsgruppe steht, die 1 bis 100 C-Atome umfasst, und jeder Rest A in jeder Wiederholungseinheit unabhängig voneinander ausgewählt wird aus K oder L, wobei K für einen divalenten Rest von aromatischen Dihydroxyverbindungen nach Entfernen der beiden Hydroxygruppen steht und L für einen divalenten Rest von Polyethern nach Entfemen zweier terminaler Hydroxygruppen steht,
mit der Maßgabe, dass, bezogen auf die Gesamtanzahl aller Reste A in der oligomeren oder polymeren Urethangruppen-freien Polyether-Verbindung, 20 bis 80% aller Reste A für K und 20 bis 80% aller Reste A für L stehen.

2. Harzkomponente nach Anspruch 1, **dadurch gekennzeichnet, dass** Komponente C2) ein Polyether mit terminalen Epoxidgruppen und einem Epoxi-Equivalentgewicht zwischen 1000 und 3000 g/mol mit zusammenhängenden Polypropylenoxidblöcken von 5 bis 18 C₃H₆O-Wiederholungseinheiten und aromatischen Blöcken, welche mindestens eine Phenylen-Struktureinheit enthalten, ist.

3. Harzkomponente nach Anspruch 1, **dadurch gekennzeichnet, dass** Komponente C2) das Reaktionsprodukt von Polypropylenoxid-diglycidylether mit einem Epoxi-Equivalentgewicht zwischen 170 und 400 g/mol, Bisphenol A und einem Diglycidylether von Bisphenol-A oder Bisphenol-F mit einem Epoxi-Equivalentgewicht zwischen 156 und 550 g/mol und einem Epoxi-Equivalentgewicht des Reaktionsproduktes zwischen 1000 und 3000 g/mol ist.

4. Harzkomponente nach einem oder mehreren der Ansprüche 1 bis 3, **dadurch gekennzeichnet, dass** sie keine Benzoxazinverbindung enthält.

5. Harzkomponente nach einem oder mehreren der Ansprüche 1 bis 4, **dadurch gekennzeichnet, dass** sie zusätzlich Elastomerpartikel enthält, die eine Kern-chaletruktur aufweisen.

6. Harzkomponente nach einem oder mehreren der Ansprüche 1 bis 5, **dadurch gekennzeichnet, dass** sie einen weiteren Schlagzähmodifizierer / Toughener enthält.

7. Harzkomponente nach Anspruch 6, **dadurch gekennzeichnet, dass** der weitere Schlagzähmodifizierer / Toughener das Umsetzungsprodukt eines carboxylgruppenhaltigen Copolymeren auf der Basis von Butadien-Acryinitril mit einem stöchiometrischen Überschuss eines Epoxidharzes gemäss C1) ist.

8. Harzkomponente nach Anspruch 6, **dadurch gekennzeichnet, dass** der weitere Schlagzähmodifizierer /Toughener das Umsetzungsprodukt eines aminogruppenhaltigen Polyethers mit einem stöchiometrischen Überschuss eines Epoxidharzes gemäss C1) ist.

9. Zweikomponentiger Klebstoff, dessen erste Komponente eine Harzkomponente nach einem oder mehreren der Ansprüche 1 bis 8 ist oder enthält und dessen zweite Komponente eine Härterkomponente darstellt, die mindestens eine aminogruppenhaltige Verbindung oder mindestens eine thiolgruppenhaltige Verbindung ist oder enthält.

10. Thermisch härtbare Zusammensetzung, enthaltend eine Harzkomponente nach einem oder mehreren der Ansprüche 1 bis 8 und
C3) mindestens einen latenten Härter für Komponente C1).

11. Thermisch härtbare Zusammensetzung nach Anspruch 10, **dadurch gekennzeichnet, dass** sie zusätzlich
C4) ein physikalisches oder chemisches Treibmittel enthält.

12. Verwendung des zweikomponentigen Klebstoffs nach Anspruch 9 oder der thermisch härtbaren Zusammensetzung nach Anspruch 10 als Strukturklebstoff oder als Matrix eines Composits.

13. Verwendung der thermisch härtbaren Zusammensetzung nach Anspruch 11 als Strukturschaum für die Verstärkung und/oder Abdichtung von Hohlräumen, insbesondere von Hohlräumen in metallischen Strukturen.

14. Gegenstand, der mindestens zwei Baukomponenten enthält, die mit einem zweikomponentigen Klebstoff nach Anspruch 9 oder mit einer thermisch härtbaren Zusammensetzung nach einem der Ansprüche 10 und 11 verklebt wurden.

15. Gegenstand, der eine aufgeschäumte und ausgehärtete Zusammensetzung nach Anspruch 11 enthält.

## Claims

1. A resin component for a one- or two-component adhesive or a structural foam, containing
C1) at least one epoxy resin, having an average of more than one epoxy group per molecule, that does not correspond to the definition of component C2);
C2) at least one oligomeric or polymeric urethane-group-free polyether compound encompassing one or more structural elements of the general formula (I) 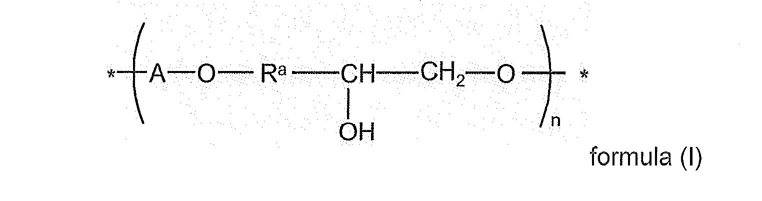 where n is a number from 5 to 10,000; each residue R^{a} denotes, mutually independently in each repeating unit, a divalent connecting group that encompasses 1 to 100 carbon atoms; and each residue A is selected, mutually independently in each repeating unit, from K or L, K denoting a divalent residue of aromatic dihydroxy compounds after removal of the two hydroxy groups, and L denoting a divalent residue of polyethers after removal of two terminal hydroxy groups,
with the provision that, based on the total number of all residues A in the oligomeric or polymeric urethane-group-free polyether compound, 20 to 80% of all residues A denote K, and 20 to 80% of all residues A denote L.

2. The resin component according to Claim 1, **characterized in that** component C2) is a polyether having terminal epoxy groups and having an epoxy equivalent weight of between 1000 and 3000 g/mol, with continuously connected polypropylene oxide blocks of 5 to 18 C₃H₆O repeating units and aromatic blocks which contain at least one phenylene structural unit.

3. The resin component according to Claim 1, **characterized in that** component C2) is the reaction product of polypropylene oxide diglycidyl ether having an epoxy equivalent weight between 170 and 400 g/mol, bisphenol A, and a diglycidyl ether of bisphenol A or bisphenol F having an epoxy equivalent weight between 156 and 550 g/mol and an epoxy equivalent weight of the reaction product between 1000 and 3000 g/mol.

4. The resin component according to one or more of Claims 1 to 3, **characterized in that** it does not contain a benzoxazine compound.

5. The resin component according to one or more of Claims 1 to 4, **characterized in that** it additionally contains elastomer particles that have a core/shell structure.

6. The resin component according to one or more of Claims 1 to 5, **characterized in that** it contains a further toughness modifier or toughener.

7. The resin component according to Claim 6, **characterized in that** the further toughness modifier or toughener is the reaction product of a carboxyl-group-containing copolymer based on butadiene-acrylonitrile with a stoichiometric excess of an epoxy resin in accordance with C1).

8. The resin component according to Claim 6, **characterized in that** the further toughness modifier or toughener is the reaction product of an amino-group-containing polyether with a stoichiometric excess of an epoxy resin in accordance with C1).

9. A two-component adhesive whose first component is or contains a resin component according to one or more of Claims 1 to 8, and whose second component represents a hardener component that is or contains at least one amino-group-containing compound or at least one thiol-group-containing compound.

10. A thermally hardenable composition containing a resin component according to one of more of Claims 1 to 8 and
C3) at least one latent hardener for component C1).

11. The thermally hardenable composition according to Claim 10, **characterized in that** it additionally contains
C4) a physical or chemical propellant.

12. Use of the two-component adhesive according to Claim 9, or of the thermally hardenable composition according to Claim 10, as a structural adhesive or as a matrix of a composite.

13. Use of the thermally hardenable composition according to Claim 11 as a structural foam for reinforcing and/or sealing cavities, in particular cavities in metallic structures.

14. An object that contains at least two structural components that have been adhesively bonded with a two-component adhesive according to Claim 9 or with a thermally hardenable composition according to one of Claims 10 and 11.

15. An object that contains a foamed and cured composition according to Claim 11.

## Revendications

1. Composant de résine destiné à un agent adhésif mono- ou bi-composant ou à une mousse de structure, contenant
C1) au moins une résine époxy ayant, en moyenne, plus d'un groupe époxy par molécule et ne répondant pas à la définition du composant C2),
C2) au moins un composé de polyéther oligomère ou polymère dépourvu de groupes uréthane, comprenant un ou plusieurs éléments structuraux répondant à la formule générale (I), 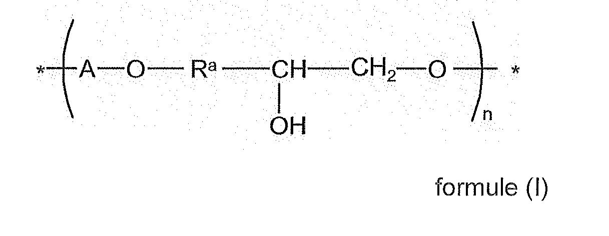 n étant un nombre compris entre 5 et 10000, chacun des résidus R^{a} représentant dans chaque unité répétitive indépendamment l'un de l'autre un groupe de liaison divalent comprenant 1 à 100 atomes de carbone, et chacun des résidus A étant choisi dans chaque unité répétitive, indépendamment l'un de l'autre, parmi K ou L, K représentant un radical divalent de composés dihydroxylés aromatiques dont les deux groupes hydroxyle ont été enlevés et L représentant un résidu divalent de polyéthers dont deux groupes hydroxyle terminaux ont été enlevés,
à condition que 20 à 80 % de l'ensemble des résidus A représentent K et 20 à 80 % de l'ensemble des résidus A représentent L, par rapport au nombre total de résidus A dans le composé de polyéther oligomère ou polymère dépourvu de groupes uréthane.

2. Composant de résine selon la revendication 1, **caractérisé en ce que** le composant C2) est un polyéther ayant des groupes époxy terminaux et un poids équivalent d'époxy compris entre 1000 et 3000 g/mol, pourvu de blocs d'oxyde de polypropylène contigus comprenant 5 à 18 unités répétitives de C₃H₈O et de blocs aromatiques contenant au moins une unité structurale de phénylène.

3. Composant de résine selon la revendication 1, **caractérisé en ce que** le composant C2) est le produit d'une réaction entre l'éther diglycidylique d'oxyde de polypropylène ayant un poids équivalent d'époxy compris entre 170 et 400 g/mol, le bisphénol A et un éther diglycidylique de bisphénol A ou de bisphénol F ayant un poids équivalent d'époxy compris entre 156 et 550 g/mol, le produit de ladite réaction ayant un poids équivalent d'époxy compris entre 1000 et 3000 g/mol.

4. Composant de résine selon une ou plusieurs des revendications 1 à 3, **caractérisé en ce qu'**il ne contient aucun composé de benzoxazine.

5. Composant de résine selon une ou plusieurs des revendications 1 à 4, **caractérisé en ce qu'**il contient en outre des particules d'élastomère présentant une structure de type noyau/enveloppe.

6. Composant de résine selon une ou plusieurs des revendications 1 à 5, **caractérisé en ce qu'**il contient un autre modificateur de résilience / toughener.

7. Composant de résine selon la revendication 6, **caractérisé en ce que** ledit autre modificateur de résilience / toughener est le produit d'une réaction entre des copolymères à base de butadiène-acrylonitrile contenant des groupes carboxyle et un excès stoechiométrique d'une résine époxy selon C1).

8. Composant de résine selon la revendication 6, **caractérisé en ce que** ledit autre modificateur de résilience / toughener est le produit d'une réaction entre des polyéthers contenant des groupes amino et un excès stoechiométrique d'une résine époxy selon C1).

9. Agent adhésif bi-composant dont le premier composant est un composant de résine selon une ou plusieurs des revendications 1 à 8 ou contient celui-ci et dont le deuxième composant représente un composant d'agent de durcissement lequel est au moins un composé contenant des groupes amino ou au moins un composé contenant des groupes thiol ou lequel contient ceux-ci.

10. Composition thermiquement durcissable, contenant un composant de résine selon une ou plusieurs des revendications 1 à 8 et
C3) au moins un agent de durcissement latent destiné au composant C1).

11. Composition thermiquement durcissable selon la revendication 10, **caractérisé en ce qu'**elle contient en outre
C4) un agent gonflant à action physique ou chimique.

12. Utilisation de l'agent adhésif bi-composant selon la revendication 9 ou de la composition thermiquement durcissable selon la revendication 10 en tant qu'agent adhésif de structure ou en tant que matrice d'un composite.

13. Utilisation de la composition thermiquement durcissable selon la revendication 11 en tant que mousse de structure destinée à renforcer et/ou rendre étanches des cavités, notamment des cavités au sein de structures métalliques.

14. Article contenant au moins deux composants structuraux lesquels ont été collés l'un à autre au moyen d'un agent adhésif bi-composant selon la revendication 9 ou au moyen d'une composition thermiquement durcissable selon l'une des revendications 10 et 11.

15. Objet contenant une composition selon revendication 11 laquelle a été transformée en mousse puis durcie.
